# EUROPEAN PATENT APPLICATION

(11) **EP 2 563 058 A2**
(43) Date of publication of application: **27.02.2013**
(21) Application number: 12193276.8
(22) Date of filing: 03.11.2009
(51) Int. Cl.: H04W 12/08, H04W 68/00, H04W 48/02, H04W 8/26

(54) **System and method to perform access control and paging using femto cells**

(30) Priority: 03.11.2008 US 110904 P; 04.11.2008 US 111123 P; 02.11.2009 US 610853
(62) Divisional of application: 09752256.9
(71) Applicant: Qualcomm Incorporated, San Diego, CA 92121-1714 (US)
(72) Inventor: Singh, Damanjit, San Diego, CA California 92121 (US); Zhao, Lijun, San Diego, CA California 92121 (US); Deshpande, Manoj M, San Diego, CA California 92121 (US); Flore, Oronzo, San Diego, CA California 92121 (US); Gupta, Rajarshi, San Diego, CA California 92121 (US); Radulescu, Andrei, San Diego, CA California 92121 (US)
(74) Representative: Dunlop, Hugh Christopher

(57) **Abstract**

Firstly, the invention concerns a method for access control in a femto cell, comprising: assigning at least one femto cell to correspond to a first identifier that identifies valid access to said femto cell; storing a list comprising at least one second identifier and at least one first identifier, wherein a second identifier corresponds to an AT and said list indicates valid first identifier and second identifier pairs; receiving, at a femto cell, a request from an AT for access (1030); sending, by the femto cell, the first identifier to at least one access control component (1035); determining, from said list, whether a second identifier for said AT corresponds to a valid first identifier for a said femto cell (1040); and granting access to said AT at said femto cell in response to said request if said AT is identified. Secondly, the invention concerns a method for paging in femto cells.

## Description

### CLAIM OF PRIORITY UNDER 35 U.S.C. 119

The present invention for patent claims priority to U.S. Provisional Application 61/111,123 filed November 4, 2008 assigned to the assignee hereof and hereby expressly incorporated by reference herein. The present invention for patent claims priority to U.S. Provisional Application 61/110,904 filed November 3, 2008 assigned to the assignee hereof and hereby expressly incorporated by reference herein.

### BACKGROUND

### I. Field

The following disclosure relates generally to wireless communication, and more specifically to managing access and paging for wireless access terminals in an environment densely populated with access points.

### II. Background

Wireless communication systems are widely deployed to provide various types of communication content such as voice, data, and so on. These systems may be multiple-access systems capable of supporting communication with multiple users by sharing the available system resources (e.g. bandwidth and transmit power). Examples of such multiple-access systems include code division multiple access (CDMA) systems, time division multiple access (TDMA) systems, frequency division multiple access (FDMA) systems, 3GPP Long Term Evolution (LTE) systems, and orthogonal frequency division multiple access (OFDMA) systems.

Traditional fixed line communication systems, such as digital subscriber line (DSL), cable line, dial-up, or like connections offered by Internet service providers (ISPs) are alternative and sometimes competing communication platforms to wireless communications. However, in recent years users have begun replacing fixed line communications with mobile communications. Several advantages of mobile communication systems, such as user mobility, small relative size of user equipment (UE), and ready access to public switched telephone networks as well as the Internet, have made such systems very convenient and thus very popular. As users have begun relying more on mobile systems for communication services traditionally obtained through fixed line systems, demand for increased bandwidth, reliable service, high voice quality, and low prices has heightened.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-in-single-out, multiple-in-signal-out, or a multiple-in-multiple-out (MIMO) system.

In addition to mobile phone networks currently in place, a new class of small base stations has emerged. These small base stations are low power and can typically utilize fixed line communications to connect with a mobile operator's core network. In addition, these base stations can be distributed for personal/private use in a home, office, apartment, private recreational facility, and so on, to provide indoor/outdoor wireless coverage to mobile units. These personal base stations are generally known as femto cells, or personal access point base stations or, access points, or home node B units (HNBs), or home-evolved eNode B units (HeNBs). Femto cell base stations offer a new paradigm in mobile network connectivity, allowing direct subscriber control of mobile network access and access quality.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Disclosed herein are several methods for performing femto cell access and paging control for a wireless access terminal (e.g. a cell phone handset) within a network of multiple femto cell components (e.g. HNBs) using an access control component (e.g. a mobile operator's core network) are presented. One method comprises storing a first group association of femto cells, using common characteristic (e.g. a Closed Subscriber Group ID), storing a second group association among access terminals (e.g. defining which access terminals belong to which Closed Subscriber Group), and authorizing an access terminal to access the femto cell components belonging to the first group. The access terminal may be paged from any or all of the femto cells belonging to the first group. Such a method supports both residential and enterprise deployments, and a particular subscriber can simultaneously be a member of an enterprise group and residential group.

To the accomplishment of the foregoing and related ends, the embodiments of the invention are hereinafter fully described and particularly pointed out in the claims. The following description and the annexed drawings set forth in detail certain illustrative aspects of the one or more embodiments. These embodiments are indicative, however, of but a few of the various ways in which the principles of various embodiments can be employed and the described aspects are intended to include all such aspects and their equivalents.

### BRIEF DESCRIPTION OF THE DRAWINGS

The features, nature, and advantages of the present disclosure will become more apparent from the detailed description set forth below when taken in conjunction with the drawings:

FIG. 1 illustrates a multiple access wireless communication system according to one embodiment of the invention;

FIG. 2 is a block diagram of a communication system according to one embodiment of the invention;

FIG. 3 depicts a communication system to enable deployment of access point base stations within a network environment according to one embodiment of the invention;

FIG. 4 is a flow diagram for a system for establishing a communication by and between components within a dense access point environment, in accordance with one embodiment of the invention;

FIG. 5 is a diagram for a deployment of an enterprise campus located in varying proximity to a residential area, in accordance with one embodiment of the invention;

FIG. 6 is a diagram of data item relationships used to perform access control and paging using femto cells, in accordance with one embodiment of the invention;

FIG. 7 is a flow diagram of access terminal processing used to perform access control and paging using femto cells, in accordance with one embodiment of the invention;

FIG. 8 is a flow diagram of femto cell processing used to perform access control and paging using femto cells, in accordance with one embodiment of the invention;

FIG. 9 is a flow diagram of network element processing used to perform access control and paging using femto cells, in accordance with one embodiment of the invention;

FIG. 10 is a protocol diagram depicting a messaging protocol to perform access control using femto cells, in accordance with one embodiment of the invention;

FIG. 11 is a protocol diagram depicting a messaging protocol to perform paging using femto cells, in accordance with one embodiment of the invention;

FIG. 12 depicts a block diagram of a system for access control in a femto cell, in accordance with one embodiment of the invention;

FIG. 13 depicts a block diagram of a system to perform certain functions of a femto cell, in accordance with one embodiment of the invention;

FIG. 14 depicts a block diagram of a system to perform certain functions of a femto cell gateway, in accordance with one embodiment of the invention;

FIG. 15 depicts a block diagram of a system to perform certain functions of an access terminal (AT), in accordance with one embodiment of the invention;

FIG. 16 depicts a block diagram of an apparatus for access control in a femto cell using hardware and software means, in accordance with one embodiment of the invention;

FIG. 17 depicts a block diagram of a system for paging in femto cells, in accordance with one embodiment of the invention;

FIG. 18 depicts a block diagram of a system to perform certain functions of a femto cell, in accordance with one embodiment of the invention;

FIG. 19 depicts a block diagram of a system to perform certain functions of a femto cell gateway, in accordance with one embodiment of the invention;

FIG. 20 depicts a block diagram of a system to perform certain functions of an access terminal, in accordance with one embodiment of the invention; and

FIG. 21 depicts a block diagram of an apparatus for paging in femto cells using hardware and software means, in accordance with one embodiment of the invention.

### DESCRIPTION

Various aspects are now described with reference to the drawings, wherein like reference characters are used to refer to like elements throughout. In the following description, for purposes of explanation, numerous specific details are set forth in order to provide a thorough understanding of one or more aspects. It can be evident, however, that such aspect(s) can be practiced without these specific details. In other instances, well-known structures and devices are shown in block diagram form in order to facilitate describing one or more aspects.

In addition, various aspects of the disclosure are described below. It should be apparent that the teaching herein can be embodied in a wide variety of forms and that any specific structure and/or function disclosed herein is merely representative. Based on the teachings herein, one skilled in the art should appreciate that an aspect disclosed herein can be implemented independently of any other aspects and that two or more of these aspects can be combined in various ways. For example, an apparatus can be implemented and/or a method practiced using any number of the aspects set forth herein. In addition, an apparatus can be implemented and/or a method practiced using other structure and/or functionality in addition to, or other than, one or more of the aspects set forth herein. As an example, many of the methods, devices, systems and apparatuses described herein are described in the context of implementing improved base station (BS) access control and paging (e.g. femto cell access control and paging) in a wireless environment comprising disparate deployments of access points. One skilled in the art should appreciate that similar techniques could apply to other communication environments.

Development of wireless access points to communication networks (e.g. public land mobile networks, PLMNs, mobile operator core network, etc.) has been one solution offered to effect convergence between traditional wireless communication systems and traditional fixed-line communication systems. The convergence, otherwise known as fixed-wireless convergence, involves a degree of interoperability between fixed line networks (e.g. intranet, Internet, etc.) and mobile communication networks (e.g. cellular phone networks). An access point, as utilized herein, includes any suitable node, router, switch, hub, or the like, configured to communicatively couple an access terminal (AT) with a communication network. The access point can be wired (e.g. employing Ethernet, universal serial bus [USB] or other wired connection for communication), wireless (e.g. employing radio signals for communication), or both. Examples of femto cell access points, or in the alternative, femto nodes, include access point base stations (BSs), wireless local area network (WLAN) access points, wireless wide area network (WWAN) access points, including worldwide interoperability for microwave access (WiMAX) BSs, and the like. Access point BSs comprise access points to a mobile communication operator's network, such as a circuit-switched voice network, a combined circuit-switched and packet-switched voice and data network, or all-packet voice and data network, or the like. Examples of an access point base station include a Node B (NB), base transceiver station (BTS), a home Node B (home NodeB, Home Node B, HNB), a home-evolved eNode B (HeNB), or simply a BS, of various transmit power/cell size including macro cells, micro cells, pico cells, femto cells, etc.

The introduction of various types of access point BSs into traditional macro BS networks enables significant flexibility and consumer control over personal access to such networks. User terminals can often be configured to select a nearby access point BS or a macro network BS, depending upon which provides a better signal and/or other factors. In addition, access point BSs can provide preferable rate plans compared with the macro network, at least in some circumstances, enabling users to reduce usage charges.

As wireless communication bandwidth and data rates have increased over time, and as AT processing and user interface capabilities have become more sophisticated, users are able to employ mobile devices to perform functions formerly available only with personal computers and fixed line communications. However, because typical macro networks are often deployed with large-scale public usage as the primary market, indoor reception can often be poorer than outdoor reception (e.g. due to the absorption of radio frequency signals by buildings, insulation, ground landscaping, etc.), rendering a mobile device less effective than a fixed-line computer in such an environment. Access point BSs can provide significant improvement in this environment, however. As one example, HNB and HeNB technology (hereinafter referred to collectively as HNB) provide a user with significant control over personal wireless connectivity, indoors and outdoors, often obviating most or all such connectivity problems. HNBs, therefore, can further extend AT mobility even in an environment that is sub-optimal for macro networks.

Despite the significant advantages of HNB and other access point deployments, some problems have resulted due to the added complexity in coupling access point BSs with an operator's macro networks. For instance, access point deployment, especially in the case of HNBs, is typically unplanned or semi-planned, meaning that these BSs are installed outside of the control of the network operator. Thus, the operator has limited capacity to implement ideal placement of these access points relative to other such access points or relative macro BSs. Furthermore, spatial shaping of wireless signals relative other access point cells (or even precise knowledge of position location of such access point cells) may be sub-optimal. In addition, where HNB deployment is open to consumer purchase and installation, a very dense installation of such cells can occur in high-population urban or commercial areas, leading to wireless resource competition among nearby HNBs and macro cells.

Furthermore, HNBs may be associated with a closed subscriber group (CSG) and provide network access only to members of the CSG; access is not provided to the general cellular public, for instance. Thus, an HNB deployment amid a macro network integrates restricted access (RA) BSs together with general access (GA) BSs. In addition to basic access control (i.e. where a BS serves to allow/deny access), an HNB deployment might also serve to conserve wireless bandwidth by establishing a mechanism for access control and paging that avoids unnecessary AT transmissions and works in both residential deployments (e.g. where a single HNB is assigned a unique CSG and is deployed in a residential setting), as well as in enterprise deployments (e.g. where multiple HNBs are assigned the same CSG, where multiple HNBs are deployed in an enterprise setting, etc.).

Many legacy ATs are not equipped to recognize, process, or respond to CSG-related data (e.g. a CSG identifier, CSG-ID, CSGID) or other data used by RA BSs. Such ATs access RA BSs irrespective of whether or not they are allowed further access rights. In other words, since legacy ATs are not equipped to recognize, process, or respond to CSG-related data, the access control mechanisms, if required, should be done at the network. If the access control is managed on a per RA BS (or per HNB basis), then in order for the network to perform access control, various techniques require the AT to communicate with the network whenever the AT moves into the coverage of a new RA BS. Although this may be efficient for residential deployments where each access point has different access restrictions (or different CSG identifier), this technique may not be efficient in enterprise deployments where a larger number of access points share the same access restrictions (or CSG identifier) and have overlapping coverage. For example, in case of access control managed on per RA BS basis, an AT moving from coverage of one RA BS to the coverage of the other RA BS will expend significant power attempting to access each one of the femto cells - all of which may respond with unnecessary signaling.

Thus, a mechanism that relies on the AT to respond (or not respond) based on the CSG identifier may not work, or may introduce inefficiencies. For example, a legacy AT can spend significant power attempting to access femto cells that would assuredly deny service to the AT (e.g. due to restrictions enforced at the RA BS). Additionally, legacy terminals and legacy wireless networking standards require mobile terminals to scan incoming wireless signals to identify optimal signals and to pick up pages. Where there are only a few nearby BSs that the terminal can distinguish, this is typically a workable process. However, in dense access point deployments, dozens or hundreds of access points can exist in close proximity (e.g. within a large urban apartment building, or within an large office building hosting staff of a large enterprise). If an AT's femto cell home access point, having a CSG that includes the AT, is within the dense deployment, distinguishing the home access point from hundreds or thousands of nearby foreign access points can create significant problems. For instance, the AT is likely to use significant power camping on (analyzing pilot and control channels) or signaling access points that will assuredly deny network access to the AT.

The preceding paragraphs address issues related to access control. In addition to access control, embodiments of the invention herein address issues related to paging. ATs are mobile by design, and may move from location to location, and yet, an AT should at any moment in time be able to receive a page. In moving from location to location, ATs, including legacy ATs perform signaling known as a Location Area Update when the AT comes under a cell site's coverage (e.g. under femto cell coverage, under HNB coverage, etc.). In settings where femto cells are deployed in high density (e.g. in an enterprise setting), a relatively large number of femto cells may end up sharing the same proximal location, and thus, may end up sharing the same location area code (LAC). In some situations, a high-density enterprise deployment may be proximally co-located with a residential deployment. Thus, paging an AT based solely on the LAC may be inefficient and may result in unnecessary signaling over the Iuh interface, and may result in wastage of bandwidth for signaling with femto cells that share the same LAC.

The embodiments described in detail below address efficient support of legacy ATs in enterprise deployments of HNBs. In particular, the embodiments discuss in detail two issues involved in AT communication with HNBs in dense environments: paging and access control.

For illustrative purposes the following paragraphs introduce terms used in describing embodiments of the invention.

As is known in the art, and according to various embodiments of the invention, an AT is capable to communicate a mobile station identification (MSID). In cases when an AT can have multiple identities, the user or AT selects a particular mobile station identity (i.e. under user control, or autonomously by the AT) to be in effect during the session. The mobile station identification (MSID) can be either a mobile identification number (MIN) or an international mobile station identity (IMSI). A Mobile Identification Number (MIN) is a 34-bit number that is a digital representation of the 10-digit number assigned to a mobile station. An international mobile station identity (IMSI) is a number up to 15 digits in length that uniquely identifies a mobile station internationally.

A Closed Subscriber Group identifies subscribers of an operator who are permitted to access one or more cells of the mobile network but which have restricted access to certain femto cells (e.g. CSG cells). For example, a subscriber of an operator might be permitted to access any/all of the femto cells deployed at the user's place of employment (e.g. a group of femto cells deployed by the employer).

A CSG cell is a femto cell accessible by the members of the closed subscriber group for that CSG identity. All the CSG cells sharing the same CSG identity use the same radio access technology. All the E-UTRAN CSG cells sharing the same identity are identifiable as a single group for the purposes of mobility management and charging. Subject to operator and registered owner agreement, a CSG cell may be reconfigured to be an unrestricted UTRAN or E-UTRAN cell.

A CSG identity is an identifier broadcast by a CSG cell or cells to facilitate access for authorized members of the associated Closed Subscriber Group. A CSG identities' white list is a list containing all the CSG identities of the CSGs to which the subscriber belongs.

The techniques described herein can be used for various wireless communication systems such as code division multiple access (CDMA), time division multiple access (TDMA), frequency division multiple access (FDMA), orthogonal FDMA (OFDMA), SC-FDMA (single carrier FDMA) and other systems. The terms "system" and "network" are often used interchangeably. A CDMA system can implement a radio technology such as Universal Terrestrial Radio Access (UTRA), CDMA2000, etc. UTRA includes Wideband-CDMA (W-CDMA) and other variants of CDMA. CDMA2000 covers IS-2000, IS-95 and IS-856 standards. A TDMA system can implement a radio technology such as Global System for Mobile Communications (GSM). An OFDMA system can implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM.RTM., etc. UTRA and E-UTRA are part of the Universal Mobile Telecommunication System (UMTS). LTE (long term evolution) is an upcoming release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). CDMA2000 and UMB are described in documents from an organization named "3rd Generation Partnership Project 2" (3GPP2).

Single carrier frequency division multiple access (SC-FDMA), which utilizes single carrier modulation and frequency domain equalization is a technique. SC-FDMA has similar performance and essentially the same overall complexity as those of OFDMA system. SC-FDMA signal has lower peak-to-average power ratio (PAPR) because of its inherent single carrier structure. SC-FDMA has drawn great attention, especially in the uplink communications where lower PAPR greatly benefits the mobile terminal in terms of transmit power efficiency. It is currently a working assumption for uplink multiple access scheme in 3GPP Long Term Evolution (LTE), or Evolved UTRA.

As used in the subject disclosure, the terms "component", "system", "module" and the like are intended to refer to a computer-related entity, either hardware, software, software in execution, firmware, middle ware, microcode, and/or any combination thereof. For example, a module can be, but is not limited to being, a process running on a processor, a processor, an object, an executable, a thread of execution, a program, a device, and/or a computer. One or more modules can reside within a process and/or thread of execution and a module can be localized on one electronic device and/or distributed between two or more electronic devices. Further, these modules can execute from various computer-readable media having various data structures stored thereon. The modules can communicate by way of local and/or remote processes such as in accordance with a signal having one or more data packets (e.g. data from one component interacting with another component in a local system, distributed system, and/or across a network such as the Internet with other systems by way of the signal). Additionally, components or modules of systems described herein can be rearranged and/or complemented by additional components/modules/systems in order to facilitate achieving the various aspects, goals, advantages, etc. described with regard thereto, and are not limited to the precise configurations set forth in a given figure, as will be appreciated by one skilled in the art.

Furthermore, various aspects are described herein in connection with an access terminal. An AT can also be called a system, subscriber unit, subscriber station, mobile station, mobile, mobile communication device, mobile device, remote station, remote terminal, access terminal (AT), user agent (UA), user device, or user equipment (UE), or the like. A subscriber station can be a cellular telephone, cordless telephone, Session Initiation Protocol (SIP) phone, wireless local loop (WLL) station, personal digital assistant (PDA), handheld device having wireless connection capability, or other processing device connected to a wireless modem or similar mechanism facilitating wireless communication with a processing device.

As used herein, a computer storage media can be any physical media that can be accessed by a computer. By way of example, and not limitation, such storage media can comprise RAM, ROM, EEPROM, CD-ROM or other optical disk storage, magnetic disk storage, or other magnetic storage devices, smart cards, and flash memory devices (e.g. card, stick, key drive . . . ), or any other suitable medium that can be used to carry or store program code in the form of instructions or data structures and that can be accessed by a computer. Hardware communication media can include any suitable device or data connection that facilitates transfer of a computer program from one entity to another and, at least in part, using electrical, mechanical, and/or electromechanical hardware. In general, a data connection is also properly termed a computer-readable medium. For example, if a program, software or other data is transmitted from a website, server, or other remote source using a coaxial cable, fiber optic cable, twisted pair, digital subscriber line (DSL), communication bus structure, Ethernet, or wireless technologies such as infrared, radio, and microwave, then the coaxial cable, fiber optic cable, twisted pair, DSL, or wireless technologies such as infrared, radio, and microwave are included in the definition of medium, and any suitable hardware components associated with such medium are included in the definition of hardware communication media. Disk and disc, as used herein, includes compact disc (CD), laser disc, optical disc, digital versatile disc (DVD), floppy disk, and blu-ray disc, where disks usually reproduce data magnetically and discs reproduce data optically with lasers. Combinations of the above should also be included within the scope of computer-readable media.

For a hardware implementation, the processing units' various illustrative logics, logical blocks, modules, and circuits described in connection with the aspects disclosed herein can be implemented or performed within one or more application specific integrated circuits (ASICs), digital signal processors (DSPs), digital signal processing devices (DSPDs), programmable logic devices (PLDs), field programmable gate arrays (FPGAs), discrete gate or transistor logic, discrete hardware components, general purpose processors, controllers, microcontrollers, microprocessors, other electronic units designed to perform the functions described herein, or a combination thereof. A general-purpose processor can be a microprocessor, but, in the alternative, the processor can be any conventional processor, controller, microcontroller, or state machine. A processor can also be implemented as a combination of computing devices, e.g. a combination of a DSP and a microprocessor, a plurality of microprocessors, one or more microprocessors in conjunction with a DSP core, or any other suitable configuration. Additionally, at least one processor can comprise one or more modules operable to perform one or more of the steps and/or actions described herein.

Moreover, various aspects or features described herein can be implemented as a method, apparatus, or article of manufacture using standard programming and/or engineering techniques. Further, the steps and/or actions of a method or algorithm described in connection with the aspects disclosed herein can be embodied directly in hardware, in a software module executed by a processor, or in a combination of the two. Additionally, in some aspects, the steps and/or actions of a method or algorithm can reside as at least one or any combination or set of codes and/or instructions on a device-readable medium, machine-readable medium, and/or computer-readable medium, which can be incorporated into a computer program product. The term "article of manufacture" as used herein is intended to encompass a computer program accessible from any computer-readable device or media.

Additionally, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application and the appended claims, the term "or" is intended to mean an inclusive "or" rather than an exclusive "or". That is, unless specified otherwise, or is clear from the context, "X employs A or B" is intended to mean any of the natural inclusive permutations. That is, if X employs A, X employs B, or X employs both A and B, then "X employs A or B" is satisfied under any of the foregoing instances. In addition, the articles "a" and "an" as used in this application and the appended claims should generally be construed to mean "one or more" unless specified otherwise or is clear from the context to be directed to a singular form.

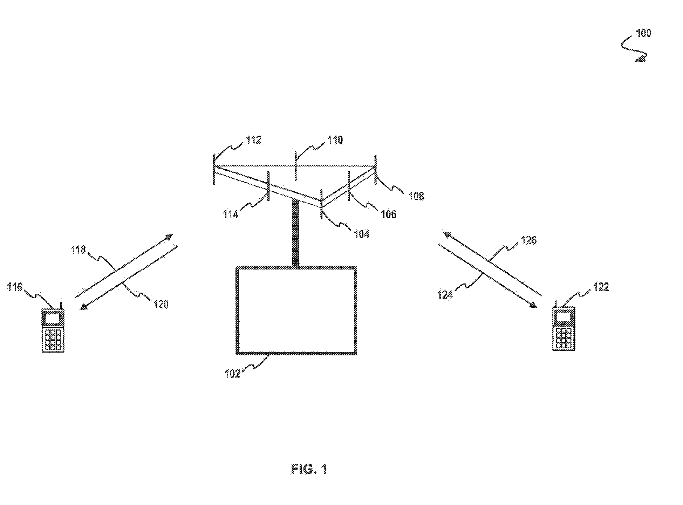

Referring to FIG. 1, a multiple access wireless communication system according to one embodiment is illustrated. An access point 102 (AP) includes multiple antenna groups, one antenna group including antennae 104 and 106, another antenna group including antennae 108 and 110, and an additional antenna group including antennae 112 and 114. In FIG. 1, only two antennae are shown for each antenna group; however, more or fewer antennae may be used for each antenna group. Access terminal 116 (AT) is in communication with antennae 112 and 114, where antennae 112 and 114 transmit information to access terminal 116 over forward link 120 and receive information from access terminal 116 over reverse link 118. Access terminal 122 is in communication with antennae 106 and 108, where antennae 106 and 108 transmit information to access terminal 122 over forward link 126 and receive information from access terminal 122 over reverse link 124. In an FDD system, communication links 118, 120, 124 and 126 may use different frequencies for communication. For example, forward link 120 may use a different frequency then that used by reverse link 118.

Each group of antennae and/or the area in which they are designed to communicate is often referred to as a sector of the access point. In the embodiment of FIG. 1, antenna groups each are designed to communicate with access terminals in a sector of the areas covered by access point 102.

In communication over forward links 120 and 126, the transmitting antennae of access point 102 utilize beamforming in order to improve the signal-to-noise ratio of forward links for the different access terminals 116 and 122. Also, an access point using beamforming to transmit to access terminals scattered randomly throughout its coverage causes less interference to access terminals in neighboring cells than an access point transmitting through a single antenna to all its access terminals.

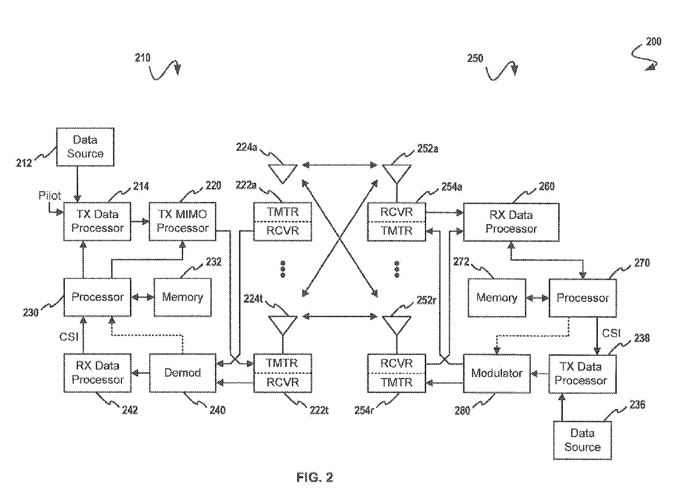

FIG. 2 is a block diagram of an embodiment of a transmitter system 210 (also known as the access point) and a receiver system 250 (also known as the access terminal) in a MIMO system 200. At the transmitter system 210, traffic data for a number of data streams is provided from a data source 212 to a transmit (TX) data processor 214. In an embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e. symbol mapped) based on a particular modulation scheme (e.g. BPSK, QSPK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g. for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transceiver 222 receives and processes a respective symbol stream to provide one or more analog signals, and further conditions (e.g. amplifies, filters, and upconverts) the analog signals to provide a modulated signal suitable for transmission over the MIMO channel. *N_{T}* modulated signals from transceivers 222a through 222t are then transmitted from *N_{T}* antennae 224a through 224t, respectively.

At receiver system 250, the transmitted modulated signals are received by *N_{R}* antennae 252a through 252r, and the received signal from each antenna 252 is provided to a respective receiver (RCVR) 254a through 254r. Each receiver 254 conditions (e.g. filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennae 224, conditioned by transceivers 222, demodulated by a demodulator 240, and processed by a RX data processor 242 to extract the reserve link message transmitted by the receiver system 250. Processor 230 then determines which pre-coding matrix to use for defining the beamforming weights, then processes the extracted message.

In an aspect, logical channels are classified into Control Channels and Traffic Channels. Logical Control Channels comprise a Broadcast Control Channel (BCCH), which is a DL channel for broadcasting system control information, and a Paging Control Channel (PCCH), which is a DL channel for transferring paging information. A Multicast Control Channel (MCCH) is a point-to-multipoint DL channel used for transmitting Multimedia Broadcast and Multicast Service (MBMS), scheduling, and control information for one or several MTCHs. Generally, after establishing an RRC connection, this channel is only used by ATs that receive MBMS (Note: old MCCH+MSCH). A Dedicated Control Channel (DCCH) is a point-to-point bi-directional channel that transmits dedicated control information and is used by ATs having an RRC connection. In an aspect, Logical Traffic Channels comprise a Dedicated Traffic Channel (DTCH), which is a point-to-point bi-directional channel dedicated to one AT, for the transfer of user information. Also, a Multicast Traffic Channel (MTCH) for point-to-multipoint DL channel is used for transmitting traffic data.

In an aspect, Transport Channels are classified into DL and UL. DL Transport Channels comprise a Broadcast Channel (BCH), a Downlink Shared Data Channel (DL-SDCH), and a Paging Channel (PCH), where the PCH for support of AT power saving (a DRX cycle is indicated by the network to the AT), broadcasted over the entire cell and mapped to PHY resources that can be used for other control/traffic channels. The UL Transport Channels comprise a Random Access Channel (RACH), a Request Channel (REQCH), an Uplink Shared Data Channel (UL-SDCH), and a plurality of PHY channels. The PHY channels comprise a set of DL channels and UL channels.

The DL PHY channels comprise:
Common Pilot Channel (CPICH)
Synchronization Channel (SCH)
Common Control Channel (CCCH)
Shared DL Control Channel (SDCCH)
Multicast Control Channel (MCCH)
Shared UL Assignment Channel (SUACH)
Acknowledgement Channel (ACKCH)
DL Physical Shared Data Channel (DL-PSDCH)
UL Power Control Channel (UPCCH)
Paging Indicator Channel (PICH)
Load Indicator Channel (LICH)

The UL PHY Channels comprise:
Physical Random Access Channel (PRACH)
Channel Quality Indicator Channel (CQICH)
Acknowledgement Channel (ACKCH)
Antenna Subset Indicator Channel (ASICH)
Shared Request Channel (SREQCH)
UL Physical Shared Data Channel (UL-PSDCH)
Broadband Pilot Channel (BPICH)

In an aspect, a channel structure is provided that preserves low PAR (at any given time, the channel is contiguous or uniformly spaced in frequency) properties of a single carrier waveform.

For the purposes of the present document, the following abbreviations apply:
- AM: Acknowledged Mode
- AT: Access Terminal
- AMD: Acknowledged Mode Data
- ARQ: Automatic Repeat Request
- BCCH: Broadcast Control CHannel
- BCH: Broadcast CHannel
- C-: Control-
- CCCH: Common Control CHannel
- CCH: Control CHannel
- CCTrCH: Coded Composite Transport Channel
- CP: Cyclic Prefix
- CRC: Cyclic Redundancy Check
- CSG: Closed Subscriber Group
- CTCH: Common Traffic CHannel
- DCCH: Dedicated Control CHannel
- DCH: Dedicated CHannel
- DL: DownLink
- DSCH: Downlink Shared CHannel
- DTCH: Dedicated Traffic CHannel
- FACH: Forward link Access CHannel
- FDD: Frequency Division Duplex
- HNBID: Femto cell ID
- IMSI: International Mobile Station Identity
- L1: Layer 1 (physical layer)
- L2: Layer 2 (data link layer)
- L3: Layer 3 (network layer)
- LI: Length Indicator
- LSB: Least Significant Bit
- MAC: Medium Access Control
- MBMS: Multimedia Broadcast Multicast Service
- MCCH: MBMS point-to-multipoint Control CHannel
- MRW: Move Receiving Window
- MSB: Most Significant Bit
- MSCH: MBMS point-to-multipoint Scheduling CHannel
- MTCH: MBMS point-to-multipoint Traffic CHannel
- PCCH: Paging Control CHannel
- PCH: Paging CHannel
- PDU: Protocol Data Unit
- PHY: PHYsical layer
- PhyCH: Physical CHannels
- RACH: Random Access CHannel
- RLC: Radio Link Control
- RRC: Radio Resource Control
- SAP: Service Access Point
- SDU: Service Data Unit
- SHCCH: SHared channel Control CHannel
- SN: Sequence Number
- SUFI: SUper FIeld
- TCH: Traffic CHannel
- TDD: Time Division Duplex
- TFI: Transport Format Indicator
- TM: Transparent Mode
- TMD: Transparent Mode Data
- TTI: Transmission Time Interval
- U-: User-
- UE: User Equipment
- UL: UpLink
- UM: Unacknowledged Mode
- UMD: Unacknowledged Mode Data
- UMTS: Universal Mobile Telecommunications System
- UTRA: UMTS Terrestrial Radio Access
- UTRAN: UMTS Terrestrial Radio Access Network
- MBSFN: multicast broadcast single frequency network
- MCE: MBMS coordinating entity
- MCH: multicast channel
- DL-SCH: downlink shared channel
- MSCH: MBMS control channel
- PDCCH: physical downlink control channel
- PDSCH: physical downlink shared channel

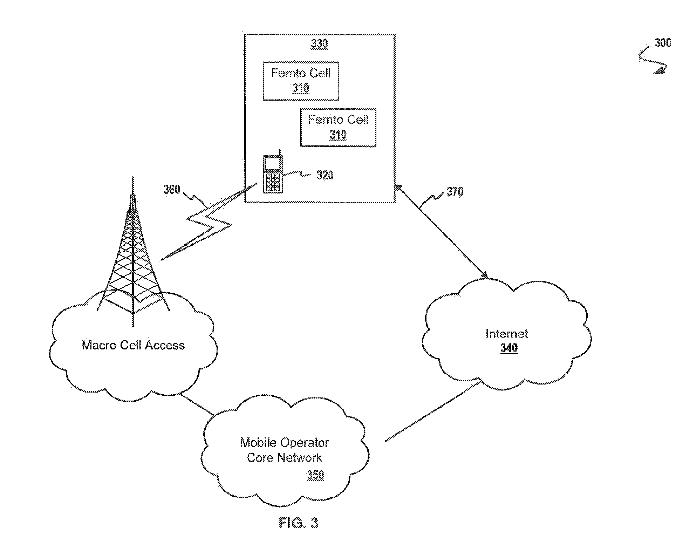

FIG. 3 depicts an exemplary communication system 300 to enable deployment of access point BSs (e.g. HNBs) within a network environment. System 300 includes multiple access point BSs including femto cell(s) or femto nodes 310, each of which are installed in correspondingly small-scale network environments. Examples of small-scale network environments can include virtually any indoor and/or indoor/outdoor facilities 330. The femto cell(s) 310 can be configured to serve associated ATs 320 (e.g. those ATs included in a CSG associated with femto cell(s) 310), or optionally configured to serve alien or visitor ATs 320 (e.g. those ATs that are not configured for the CSG of the femto cell(s) 310). An AT 320 communicates with a femto cell 310 over a wireless link 360. Each femto cell 310 is further coupled to the Internet 340 and a mobile operator core network 350 via a DSL router (not shown) or, alternatively, a cable modem, broadband over power line connection, satellite Internet connection, or a like broadband Internet connection 370.

The femto cells 310 might be embodied as Home NodeB units (HNBs), or Home-evolved NodeB units (HeNBs). As shown, the AT 320 is capable to operate in a macro cellular environment and/or in a residential small-scale network environment, utilizing various techniques described herein. Thus, at least in some disclosed aspects, femto cell 310 can be backward-compatible with any suitable existing AT 320. It should be appreciated that although aspects described herein employ 3GPP terminology, it is to be understood that the aspects can also be applied to 3GPP technology (Release 99 [Re199], Re15, Re16, Re17, Re18, Re19, Re110), as well as 3GPP2 technology (1xRTT, 1xEV-DO Re10, RevA, RevB) and other known and related technologies.

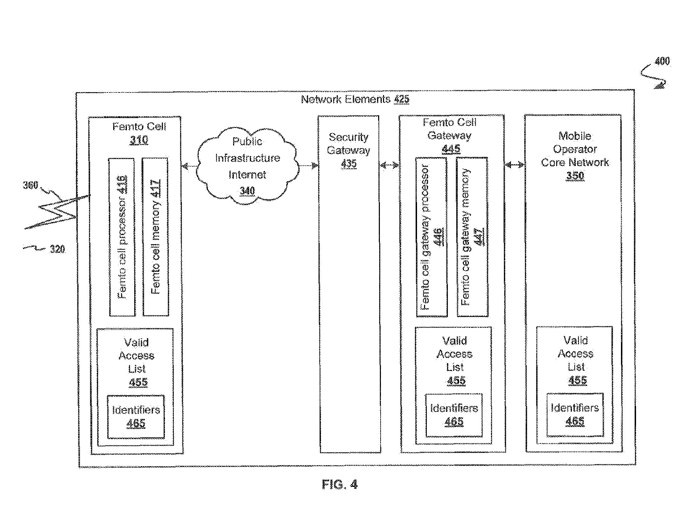

FIG. 4 is a flow diagram for a system 400 for establishing a communication by and between components within a dense access point environment, in accordance with one embodiment. As an option, the present system 400 may be implemented in the context of the architecture and functionality of FIG. 1 through FIG. 3. Of course, however, the system 400 or any operation therein may be carried out in any desired environment.

As shown, AT 320 is in communication with network elements 425 over wireless link 360, which wireless link may carry messages (e.g. an access request, an access grant, a page, a broadcast message, an AT register accept message, a location update, etc.). The network elements may include femto cell(s) 310, security gateway(s) 435, femto cell gateway(s) 445 (e.g. an HNB gateway), and a mobile operator core network 350. In addition to the network elements shown, the network elements 425 may include a mobility management entity (MME), a Home NodeB gateway (HNB-GW), a mobile switch center (MSC), a Serving GPRS Serving Node (SGSN), and/or a visiting location register (VLR). More specifically, AT 320 is in communication with femto cell 310, and femto cell 310 in turn is in communication with a security gateway 435, a femto cell gateway 445 (e.g. HNB-GW), and a mobile operator core network 350. Any of the communication links may comprise any suitable technology (e.g. over-the-air communications, wired or wireless communications, public switched networks, etc.) and may employ communication infrastructure such as the Internet 340.

The femto cell 310 communicates with a femto cell gateway 445. A femto cell gateway may be embodied as an HNB gateway (HNB-GW), or a home-evolved eNodeB gateway (HeNB-GW), or another gateway device capable of carrying out a message exchange under computer control.

The femto cell gateway 445 serves for messaging by and between the mobile operator core network 350 and one or more femto cells 310, possibly involving a security gateway 435. The security gateway may be embodied as a module separate from the femto cell gateway (e.g. separate from the femto cell gateway 445) as shown, or the security gateway may be embodied as a module within a femto cell gateway as is described infra.

Any one or more of the network elements 425 may include a list 455, the list 455 including an identifier 465 or identifiers of various types (e.g. a CSGID, an IMSI, a location identifier, an identifier, a first identifier, a second identifier, a third identifier, etc.), and the list 455 may be organized so as to relate one type of identifier with another type of identifier 465 (e.g. in a list of pairs, in a list of tables, etc.). Such a list 455 may be stored in a memory, and may include valid identifiers, and/or valid pairs of identifiers for identifying valid access (e.g. any one or more access rights), or any relationship in any organization to an identifier that identifies valid access. As an example, a list 455 may contain pairs indicating valid access to a particular AT 320 based on an IMSI, and/or may contain pairs indicating IMSIs that are valid for a CSGID. Such a list 455 can be used granting a particular AT access to a particular femto cell in response to a request from the particular AT if the particular AT has access rights to said femto cell. In various embodiments, any one or more components of network elements 425 (e.g. femto cell 310, femto cell gateway 445, mobile operator core network 350, etc.) is capable of generating an indication to grant an AT access to a femto cell if the AT is identified from a list 455 as being assigned grantable access rights.

Any one or more of the network elements 425 may comprise a processor and a memory. For example, a femto cell 310 may comprise a femto cell processor 416 and a femto cell memory 417. Or, a femto cell gateway 445 may comprise a femto cell gateway processor 446 and a femto cell gateway memory 447.

The embodiments described in detail below generally address efficient support of legacy ATs in broad deployments of HNBs. In particular, the embodiments present several possible techniques to address the issues involved, in particular issued related to access control and paging. Techniques for AT access control based on per-HNB IMSI lists may not scale well for large deployment of multiple HNBs sharing the same CSG (e.g. as is the case for enterprise deployments). Also, several HNB-specific paging techniques have been proposed as mechanisms for paging at the specific HNBs, yet such HNB-specific paging mechanisms also appear not to be suited for enterprise deployments. As is described herein, embodiments of the invention use the existing Closed Subscriber Group identifier (CSGID) to address both access control and paging.

### Constraints Affecting Signaling Efficiency for Access and Paging

Widespread deployments of femto cells likely necessitates that the density of femto cells will increase over time. Both residential and enterprise femto cells may be deployed in the same proximity. Moreover, enterprise deployments may include an extremely high density of femto cells located, for example, within the same multi-story building. Such density, together with the co-location of residential and enterprise deployments, introduces new issues to be solved.

In embodiments of the invention, both legacy and non-legacy ATs are intended to support restricted access to HNBs (e.g. via a Closed Subscriber Group or other technique). For the non-legacy UMTS Release 8 ATs, HNBs are required to transmit the respective CSGID over the air to allow ATs to determine if they can access a particular HNB. For Release 8 ATs, CSGID information, is available at the HNBs, and can be passed on to the HNB-GW during the HNB Registration procedure, as stated in 3GPP TS 25.467, UTRAN architecture for 3G Home NodeB; Stage 2 (Release 8), and in 3GPP TS 25.469, UTRAN Iuh Interface HNBAP signaling (Release 8), both incorporated by reference herein. However, legacy ATs (e.g. UMTS pre-Release 8 ATs), do not process CSGIDs. Thus a technique must be defined in order to support efficient paging and access control for both legacy and non-legacy ATs, in dense HNB deployments.

For residential deployments of HNBs, it is possible to assign each HNB with a location area code (LAC) that is unique in its geographic neighborhood. This assignment of a unique LAC ensures that a legacy AT always performs location area (LA) updates whenever it comes under the HNB coverage. An HNB may then trigger an AT Registration procedure with HNB-GW, informing the gateway (GW) about the AT's HNB location and allowing it to perform access control. However, in the case of enterprise deployments, the presence of a large number of HNBs in the same geographic vicinity makes assigning a unique LAC to each HNB undesirable because the presence of a large number of LACs in a relatively close proximity (e.g. within an office building) would cause a legacy AT to perform LA updates whenever it moves (reselects) from one HNB to another. That is, moving between HNBs may happen quite often as a user moves about in an office building. Requiring legacy ATs to perform LA updates whenever it moves (reselects) from one HNB to another would lead to a significant increase in signaling. Moreover, a significant increase in signaling would impact the AT's standby time unfavorably. Also, the number of LACs available for HNBs may be limited by standards in use and, therefore, it may not be practical to reserve one LAC for each HNB deployed in an enterprise campus.

Thus, in embodiments described herein, HNBs deployed in an enterprise campus share the same LAC. In other words, HNBs within an enterprise campus are treated as a group rather than individual HNBs. In some embodiments, HNBs deployed in an enterprise campus are grouped so as to associate to (e.g. share) a common CSGID (e.g. a CSGID-based grouping). Disclosure of the embodiments below described how a GW can use the CSGID-based grouping to do efficient paging and access control for legacy ATs, even in the case of a high density mixed deployment (e.g. comprising both residential deployments and enterprise deployments).

### Efficiency for Paging and Access

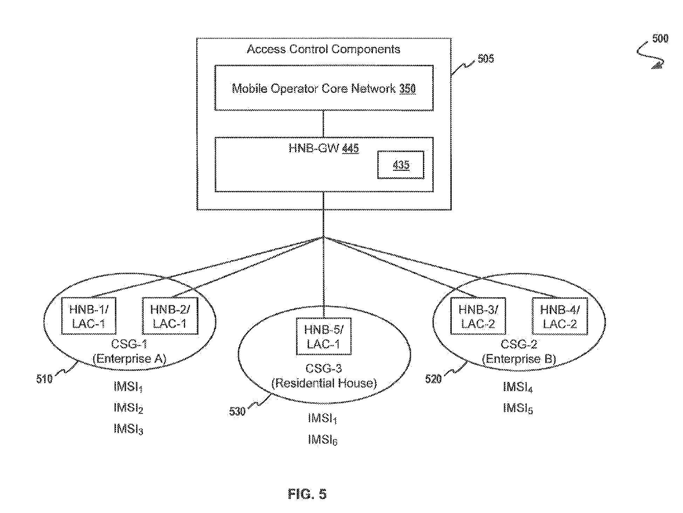

FIG. 5 is a diagram for a deployment 500 of an enterprise campus located in varying proximity to a residential area, in accordance with one embodiment. As an option, the present deployment 500 may be implemented in the context of the architecture and functionality of FIG. 1 through FIG. 4. Of course, however, the deployment 500 or any operation therein may be carried out in any desired environment.

As shown, all three deployments 510, 520, and 530 are serviced under a mobile operator core network 350. In this example, all three deployments are associated with a single HNB-GW 445, which HNB-GW 445 is one of a plurality of access control components 505. In various embodiments, an access control component 505 may be implemented by any one or more of, a security gateway, a femto cell gateway, a mobile operator core network 350, a mobility management entity (MME), a Home NodeB gateway (HNB-GW), a mobile switch center (MSC), a Serving GPRS Serving Node (SGSN), and/or a visiting location register (VLR), and/or any network component capable of storing a group association. One enterprise deployment (i.e. the Enterprise A deployment 510) includes two femto cells, labeled HNB-1/LAC-1 and HNB-2/LAC-1. Similarly, a second enterprise deployment (i.e. the Enterprise B deployment 520) includes two femto cells labeled HNB-3/LAC-2 and HNB-4/LAC-2. The residential deployment (i.e. Residential House deployment 530) includes a single femto cell, labeled HNB-5/LAC-1.

Also shown are assignments of ATs to Closed Subscriber Groups. That is, the Closed Subscriber Group CSG-1 includes (i.e. allows access to) the ATs labeled IMSI₁, IMSI₂, and IMSI₃, possibly representing the employees of Enterprise A. Similarly, the Closed Subscriber Group CSG-2 includes (i.e. allows access to) the ATs labeled IMSI₄ and IMSI₅, possibly representing the employees of Enterprise B. Similarly, the Closed Subscriber Group CSG-3 includes (i.e. allows access to) the ATs labeled IMSI₁ and IMSI₆, possibly representing the users of the Residential House deployment 530 (e.g. occupants of the Residential House). Note that IMSI₁ is assigned to CSG-1 as well as to CSG-3, possibly representing that the employee of Enterprise A with AT IMSI₁ is also an occupant of the Residential House.

The Residential House deployment 530 shares the same LAC (i.e. LAC-1) with the Enterprise A deployment 510. Thus, as earlier suggested, inasmuch as HNBs are deployed in large numbers, a number of HNBs may end up sharing the same LAC, and thus, the Residential House deployment 530 and the Enterprise A deployment 510 are shown as sharing the same LAC, namely LAC-1.

As earlier described, paging an AT based purely on LAC may be result in unnecessary signaling, and unnecessary usage of bandwidth for communication between HNBs that share the same LAC. To illustrate HNB-specific paging using the exemplary deployment 500, a page for the user of IMSI₁ received while said user is at home (i.e. registered via HNB-5) is to be forwarded to IMSI₁ using only HNB-5. That is, in embodiments of HNB-specific paging, an AT is paged only by the HNB at which the AT is registered. Thus, when a page for a particular AT (e.g. IMSI₁) is received at the HNB-GW 445, the HNB-GW determines the HNB at which this AT IMSI₁ is registered (for example, at HNB-5) and pages using only that HNB, HNB-5. Although this solution works for residential deployments where each HNB has a unique LAC in its neighborhood, it falls short in the enterprise deployments (i.e. under the aforementioned, proposed HNB-specific paging regime). Consider an enterprise deployment situation under the aforementioned, HNB-specific paging regime when, if an AT IMSI₁ registered at HNB-1 in Enterprise A were to move from HNB-1 to HNB-2, it does not perform any LA update (since the LAC did not change). Thus, performing HNB-specific paging will end up paging the AT IMSI₁ only at the specific HNB-1 even though the AT IMSI₁ may have moved to HNB-2. Thus the aforementioned HNB-specific paging regime risks AT IMSI₁ to miss the page.

In contrast to HNB-specific paging, paging based on embodiments of the invention, an AT is paged based on the combination of the LAC and CSGID of the HNB at which the AT has last been registered. Thus, if the AT registered itself at HNB-1, the HNB-GW 445 will detect that the AT is associated under CSG-1 and LAC-1, and thus all HNBs sharing the combination of the LAC and CSGID are requested to page the AT. Thus, regardless if the AT is under the coverage of HNB-1 or is under the coverage of HNB-2, the HNB-GW 445 will page all of the HNBs with CSG-1 and LAC-1, i.e., both HNB-1 and HNB-2 of Enterprise A. However, the Residential House deployment 530 having HNB-5 with the same LAC will not be paged, as its CSGID is different from that of Enterprise A. Also, if the AT had registered itself at HNB-5, only HNB-5 would page the AT-and the HNB-1 and HNB-2 of Enterprise A would not service the page.

Thus, use of CSG information together with LAC information may be implemented to support effective paging for both residential and enterprise scenarios. Note that the exemplified ATs (e.g. legacy ATs, UMTS pre-Release 8 ATs) themselves do not need to process based on the CSGID, thus allowing this paging technique based on the combination of the LAC and CSGID, to be implemented using solely the network elements 425.

### Access Control Including Legacy ATs

As earlier discussed, both legacy and non-legacy ATs are intended to support restricted access to HNBs via a Closed Subscriber Group or other technique.

In embodiments involving a Release 8 AT, the Release 8 AT is able (i.e. by virtue of adherence to the Release 8 specification) to process and make logical decisions (e.g. to access or not to access a particular HNB) based on the CSGID broadcasted by the HNB. Referring to FIG. 5, if a Release 8 AT is allowed access to Enterprise A CSG (i.e. CSG-1), it should also be able to access HNB-1 and HNB-2 since HNB-1 and HNB-2 both serve ATs associated with CSG-1. A legacy AT (e.g. a pre-Release 8 UMTS AT) associated with CSG-1 should also be allowed access to HNB-1 and/or HNB-2, even though some ATs (e.g. legacy ATs, pre-Release 8 UMTS ATs) themselves do not process based on the CSGID.

In a possible embodiment, the same access control list (i.e. list of allowed AT IMSIs) may be supplied to every HNB that belongs to the same CSGID. In that case, when a visitor comes to an enterprise, the visitor's AT IMSI needs to be updated in every HNB of the enterprise. In an alternate solution, an access control list may be allocated per CSGID and stored in one or more network elements. The HNB-GW can, therefore, perform access control for a legacy AT by checking for the AT's ID (e.g. IMSI) in the access control list corresponding to the CSGID of the HNB. The HNB can also perform an optional access control by using the access control list corresponding to its CSGID.

In another embodiment, the organization of the relationship between a CSGID and an allowed AT IMSI can be reversed such that an AT-oriented (e.g. IMSI-oriented) access control list may be organized as a list of known IMSIs, with each list entry also indicating the CSGIDs for which the subject IMSI should be granted access. The HNB-GW can, therefore, perform access control for legacy ATs by checking the presence of a CSGID in the HNB that the AT is trying to access in the AT-oriented access control list entry corresponding to the AT's IMSI.

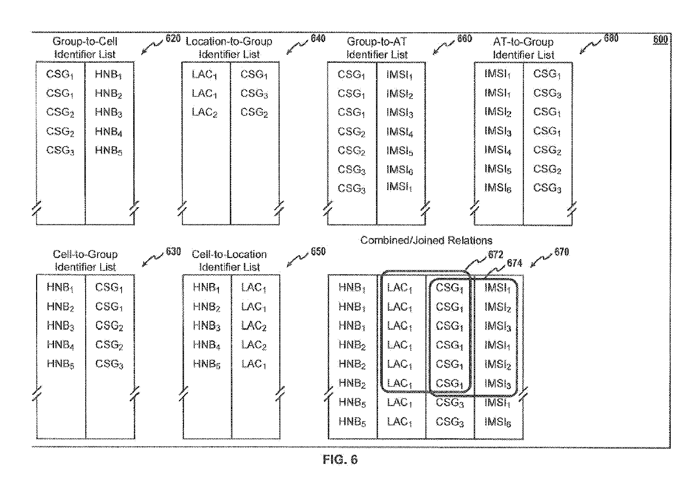

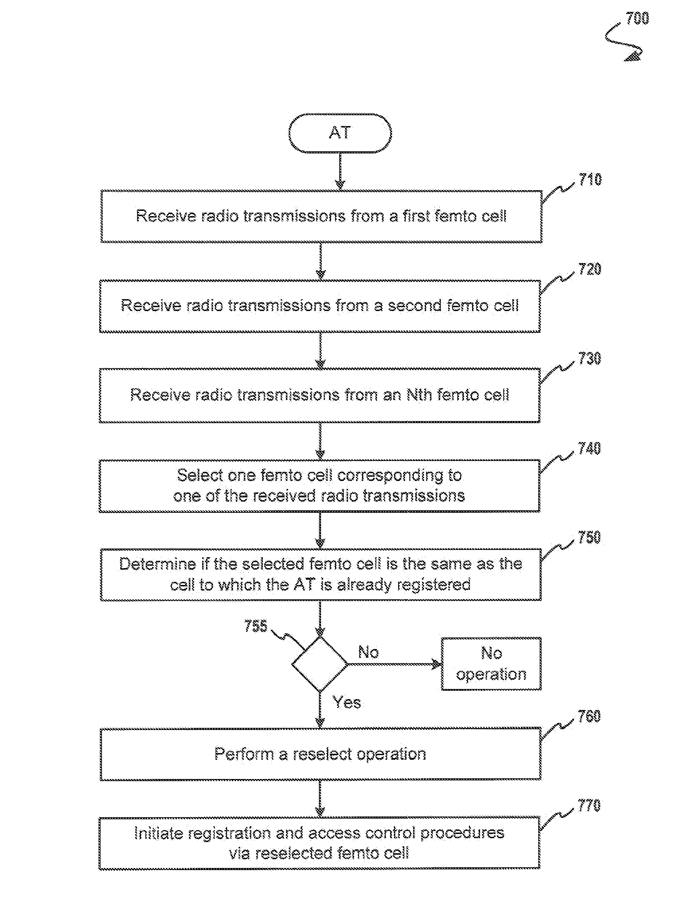

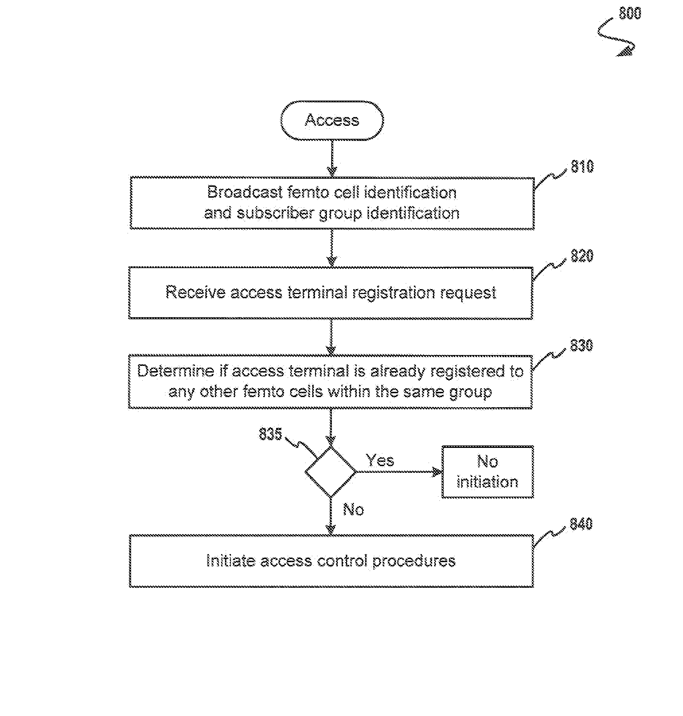

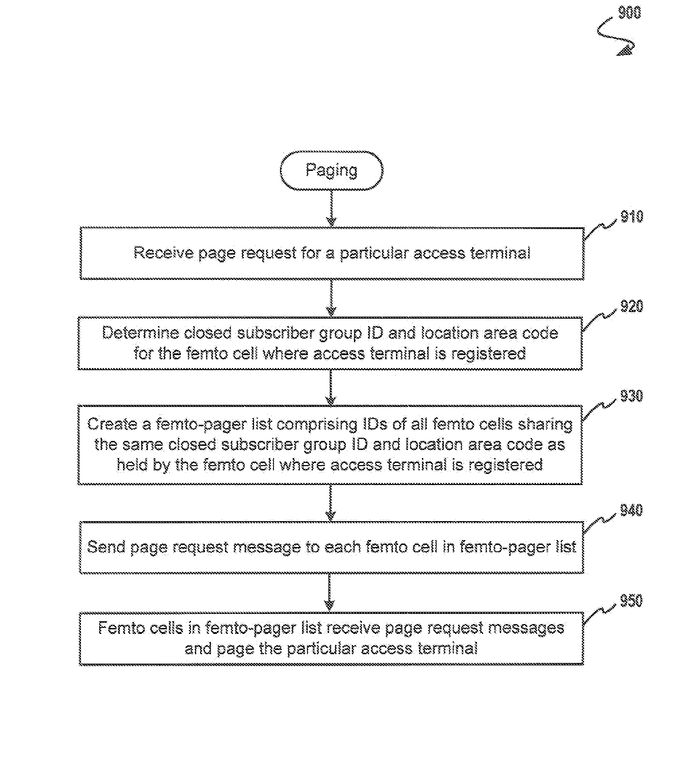

FIG. 6 is a diagram of data item relationships used to perform access control and paging using femto cells, in accordance with one embodiment. As an option, the data item relationships 600 may be implemented in the context of the architecture and functionality of FIG. 1 through FIG. 5. Of course, however, the data item relationships 600 or any aspects therein may be implemented in any desired environment.

The data item relationships are shown as relations where a given data item in the left column is given an association to the specific data item found in the same row and in the right column. For example, the group-to-cell table 620 contains rows of groups named by an identifier (e.g. CSG₁, CSG₂, CSG₃, etc.), and associated (e.g. same row, right column) with a femto-cell identifier (e.g. HNB₁, HNB₂, HNB₃, etc.). The same association is shown in a reverse organization in the cell-to-group table 630. Thus, femto cell identifiers (e.g. HNB₁, HNB₂, HNB₃ HNB₄, HNB₅) are associated with corresponding groups named by an identifier (e.g. CSG₁, CSG₂, CSG₃, etc.). A subset of femto cells can thus be selected on the basis of a common characteristic. For example, referring to cell-to-group table 630, the femto cells labeled HNB₁ and HNB₂ share the common characteristic of an association with the group CSG₁.

Of course, a table such as cell-to-group table 630 may be stored in computer memory using any techniques in the computer arts for storing identifiers, so a generalized technique for storing a mapping of groups to cells might be described as storing a group association (e.g. a table, a list, etc.) of a plurality of grouped femto cells, wherein each grouped femto cell shares a common characteristic. In the embodiment of cell-to-group table 630, one such group of femto cells sharing a common characteristic is comprised of HNB₁ and HNB₂, where each shares the common characteristic of CSG₁.

Also shown in FIG. 6 are relations between data items, specifically location-to-group table 640 (i.e. using location identifiers LAC and using group identifiers CSGID), cell-to-location table 650 (i.e. using femto cell identifiers HNBID and location area code identifiers LAC), group-to-AT table 660 (i.e. using group identifiers CSGID and access terminal identifiers IMSI), and AT-to-group table 680 (i.e. using AT identifiers IMSI and group identifiers CSGID).

Of course, a table such as AT-to-group table 680 may be stored in computer memory using any techniques in the computer arts for storing identifiers, so a generalized technique for storing a mapping of ATs to groups might be described as storing a group association (a table) of a plurality of access terminal identifiers, wherein each grouped access terminal shares a common characteristic. In the embodiment of AT-to-group table 680, one such group of access terminals sharing a common characteristic is comprised of IMSI₄ and IMSI₅, where each shares the common characteristic of CSG₂. Another such group of access terminals sharing a common characteristic is comprised of IMSI₁, IMSI₂ and IMSI₃, where each shares the common characteristic of CSG₁.

Relations between data items may comprise combined or joined relations 670 to create larger relations. In some cases group associations can be extracted from the larger relations; for example, group-to-LAC association 672, or group-to-AT association 674.

FIG. 7 is a flow diagram of access terminal processing 700 used to perform access control and paging using femto cells, in accordance with one embodiment. As an option, the present system 700 may be implemented in the context of the architecture and functionality of FIG. 1 through FIG. 6. Of course, however, the system 700 or any operation therein may be carried out in any desired environment.

As shown, an access terminal receives radio transmissions from a first femto cell (see operation 710), and further receives radio transmissions from a second femto cell (see operation 720), and still further, the access terminal receives an Nth radio transmission from an Nth femto cell (see operation 730). Given information from the radio transmissions (e.g. measurements of the radio channel quality), the terminal picks one femto cell among the choices (see operation 740). The access terminal will compare the picked femto cell with the cell to which the access terminal is already registered (see operation 750). As shown by decision process 755, if the selected femto cell identifier is different from the identifier of the cell at which the access terminal is already registered, then the access terminal will perform a reselect operation (see operation 760) and proceed to register, if required, with the newly selected cell (see operation 770).

FIG. 8 is a flow diagram of femto cell processing 800 used to perform access control and paging using femto cells, in accordance with one embodiment. As an option, the present system 800 may be implemented in the context of the architecture and functionality of FIG. 1 through FIG. 7. Of course, however, the system 800 or any operation therein may be carried out in any desired environment.

As shown, a femto cell broadcasts the femto cell's HNBID and the CSG to which it is associated (see operation 810). In the event that an access terminal initiates a registration request, the femto cell will receive the access terminal registration request (see operation 820). As shown by decision process 835, if the femto cell determines that the requesting access terminal is not already registered to any other femto cell within the same subscriber group (see operation 830), then an access control is procedure is initiated (see operation 840).

FIG. 9 is a flow diagram of network element processing 900 used to perform access control and paging using femto cells, in accordance with one embodiment. As an option, the present system 900 may be implemented in the context of the architecture and functionality of FIG. 1 through FIG. 8. Of course, however, the system 900 or any operation therein may be carried out in any desired environment.

As shown, a network element receives a page request for a particular access terminal (see operation 910). A network element (e.g. a femto cell gateway, a mobile operator core network, etc.) determines the closed subscriber group identifier and location area code of the femto cell to which the access terminal is registered (see operation 920). Given a closed subscriber group identification and location area code, and possibly using any one or more or variants of the data item relationships 600, the network element creates a femto-pager list comprising identification of femto cell(s) that share the aforementioned closed subscriber group identifier and location area code (see operation 930). The network element 425 sends page request messages to the femto cells in the list (see operation 940). In turn, the femto cells in the list receive the page request messages and page the particular access terminal (see operation 950).

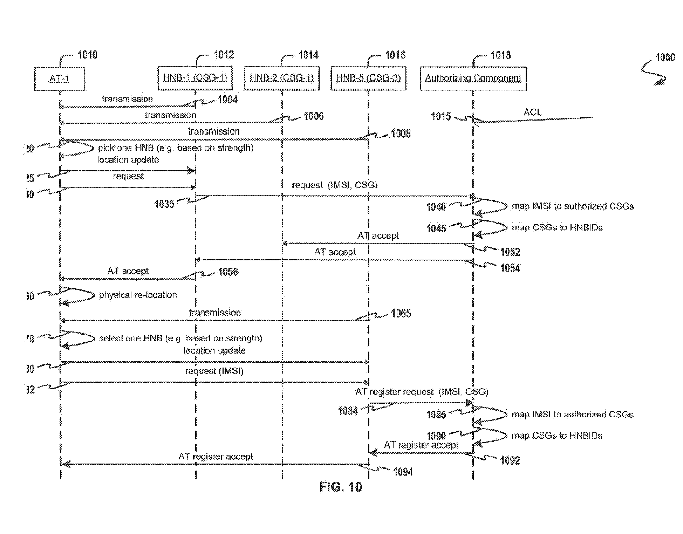

FIG. 10 is a protocol diagram depicting a messaging protocol to perform access control using femto cells, in accordance with one embodiment. As an option, the present protocol 1000 may be implemented in the context of the architecture and functionality of FIG. 1 through FIG. 9. Of course, however, the protocol 1000 or any operation therein may be carried out in any desired environment.

As shown, the protocol 1000 is carried out by components including access terminal AT-1 1010, femto cell HNB-1 1012, femto cell HNB-2 1014, femto cell HNB-5 1016, and an authorizing component 1018. Also participating in the protocol is a module (not shown) for sending an access control list ACL 1015.

The protocol may commence at any point in time, and the specific order and/or interleaving of messages and operations involved in the protocol are presented for illustrative purposes. As shown, each femto cell HNB-1, HNB-2, and HNB-5 transmits a message, possibly including their respective location area code (e.g. LAC) and femto cell identifier (e.g. HNBID). An access terminal in proximity, in this case access terminal AT-1 1010, receives the transmissions 1004, 1006, and 1008. Access terminals may pick one femto-cell for reselecting (see operation 1020). If the location code has changed, then the access terminal AT-1 performs a location update (see message 1025) and registration request including the access terminal's identification (see message 1030). The receiving femto cell (e.g. HNB-1 1012) relays the AT registration request to an authorizing component 1018, including in the message the access terminal identification (e.g. IMSI). Using an AT-to-Group representation (e.g. AT-to-group table 680), the authorizing component may map the access terminal identifier (e.g. IMSI) to one or more group IDs (e.g. CSGs), and may further map the group IDs to a list of femto cells, each of which femto cell receives authorization information for the access terminal AT-1 (see messages 1052, 1054, and 1056). The operation to map the access terminal identifier (see operation 1040) to one or more group IDs, and the operation to map the group IDs to a list of femto cells (see operation 1045), may be performed by the authorizing component 1018, or it might be performed by an alternate component (e.g. mobile operator core network 350). The femto cell selected by the access terminal AT-1 1010, which received the message 1030 (e.g. Location Updating Request message), then sends a message (e.g. Location Updating Accept message) to the access terminal (see message 1056).

At some point in time, the user of AT-1 may move to a new location and receive a different set of transmissions. In the example shown, after physical relocation activity 1060, the access terminal AT-1 receives transmissions only from femto cell HNB-5 (see transmission message 1065), at which time access terminal AT-1 1010 reselects (see operation 1070), selecting femto cell HNB-5, and sends a message (see message 1080). The access terminal AT-1 may send a registration request and provides the access terminal's identification (see message 1082). The receiving femto cell (e.g. HNB-5 1016) performs AT registration with an authorizing component 1018, including in the message the access terminal identification (e.g. IMSI) and the CSG to which the femto cell HNB-5 is assigned. Using an AT-to-Group association (e.g. AT-to-group table 680), the authorizing component may map the access terminal identifier (e.g. IMSI) to one or more group IDs (e.g. CSG IDs), and may further map the group IDs to a list of femto cells, each of which femto cell receives authorization information for the access terminal AT-1 (see messages 1092). The femto cell then sends an AT register accept message to the access terminal (see message 1094).

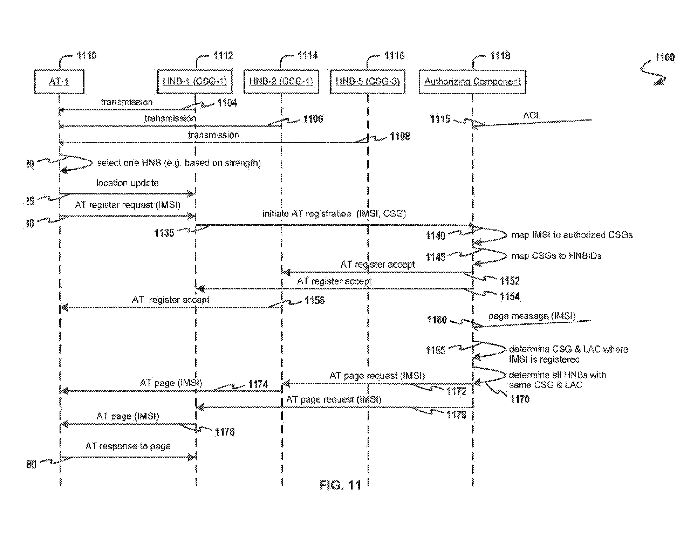

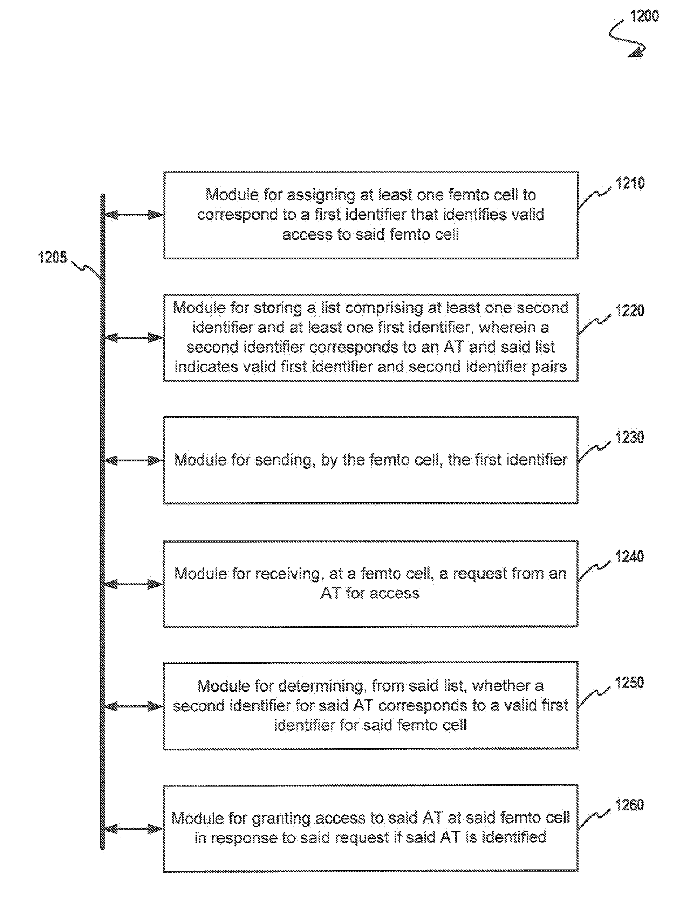

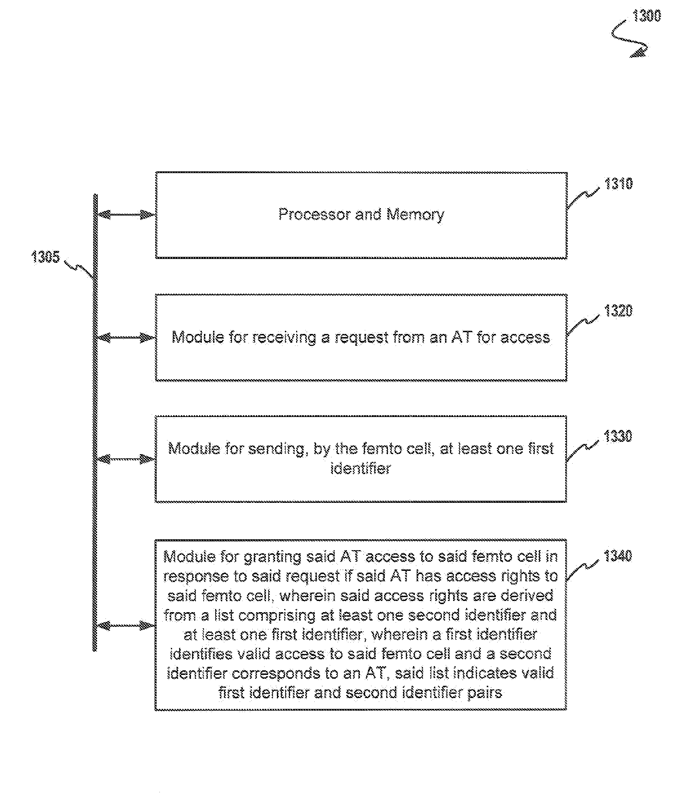

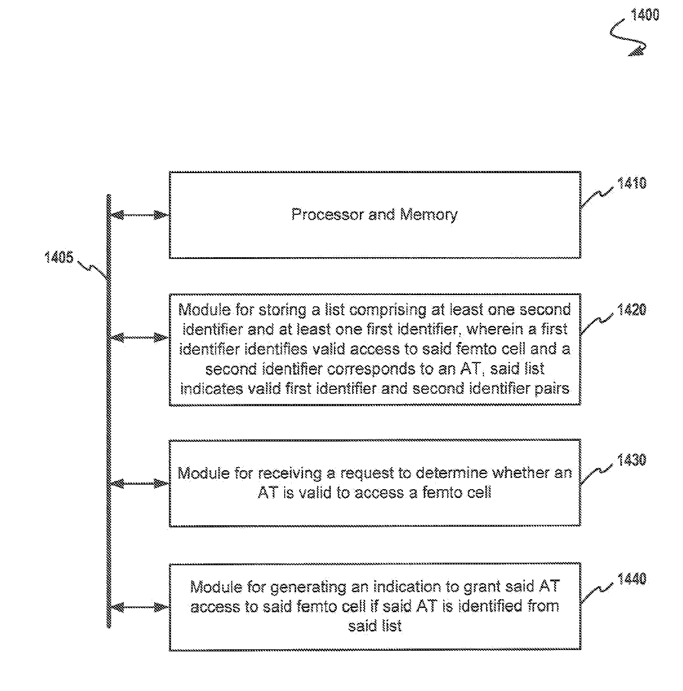

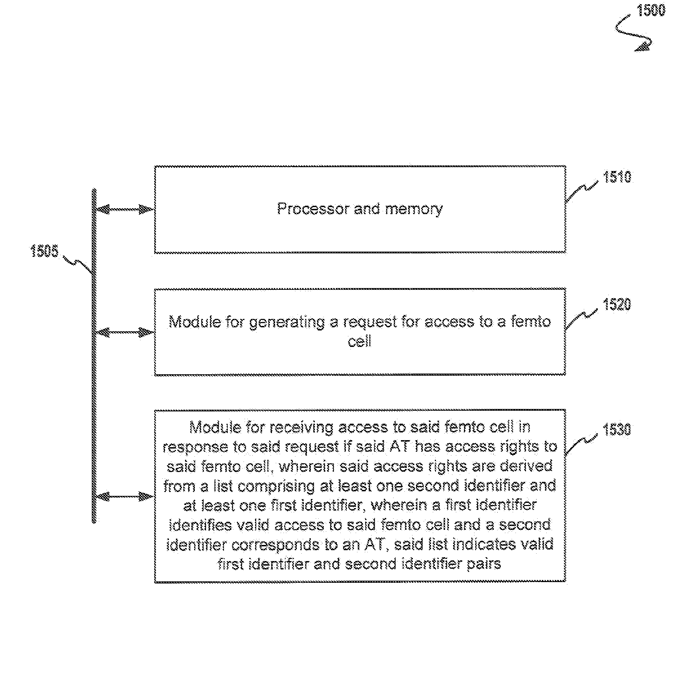

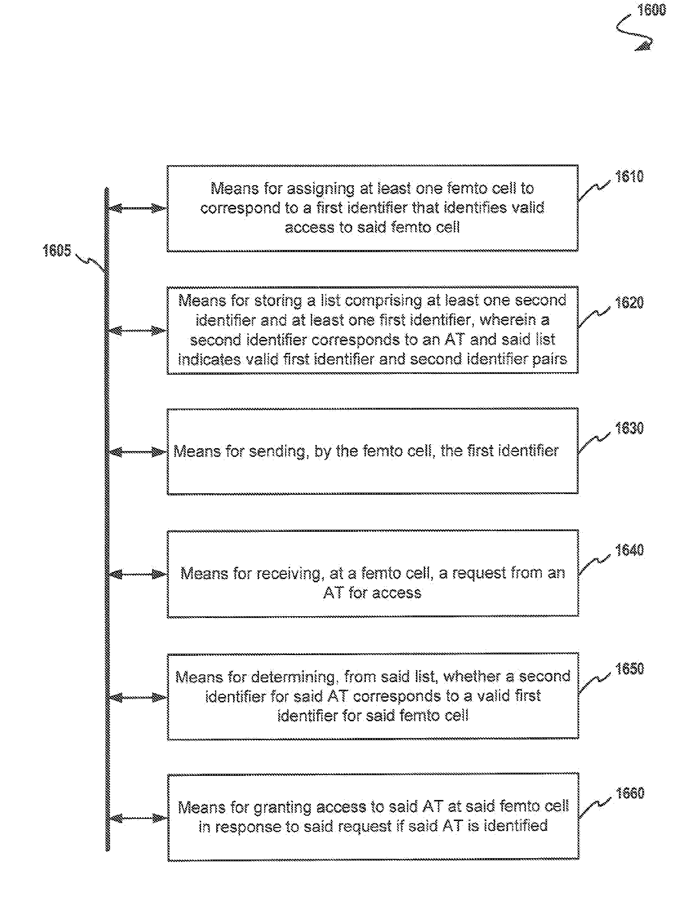

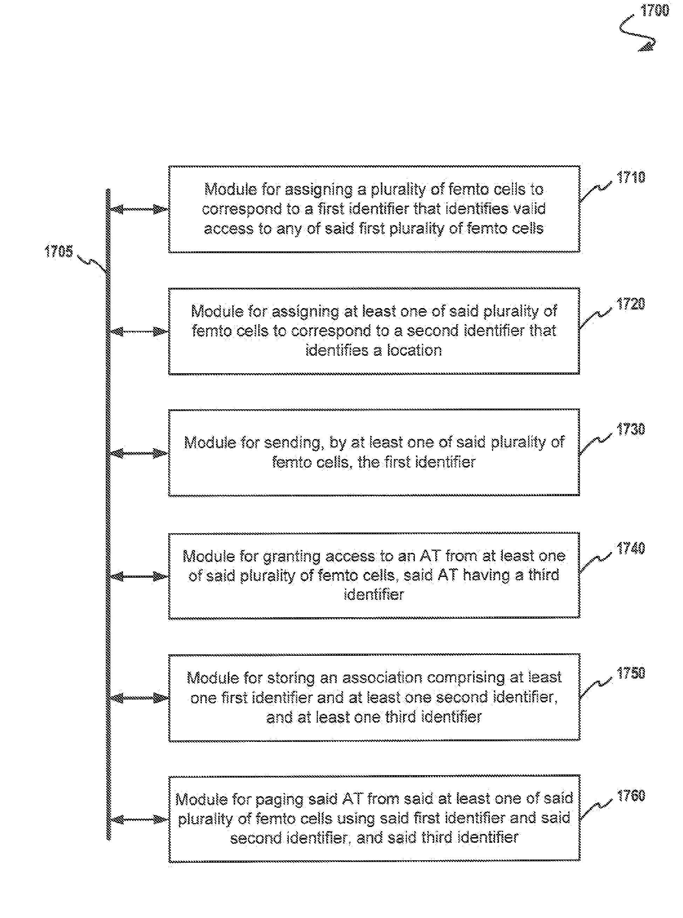

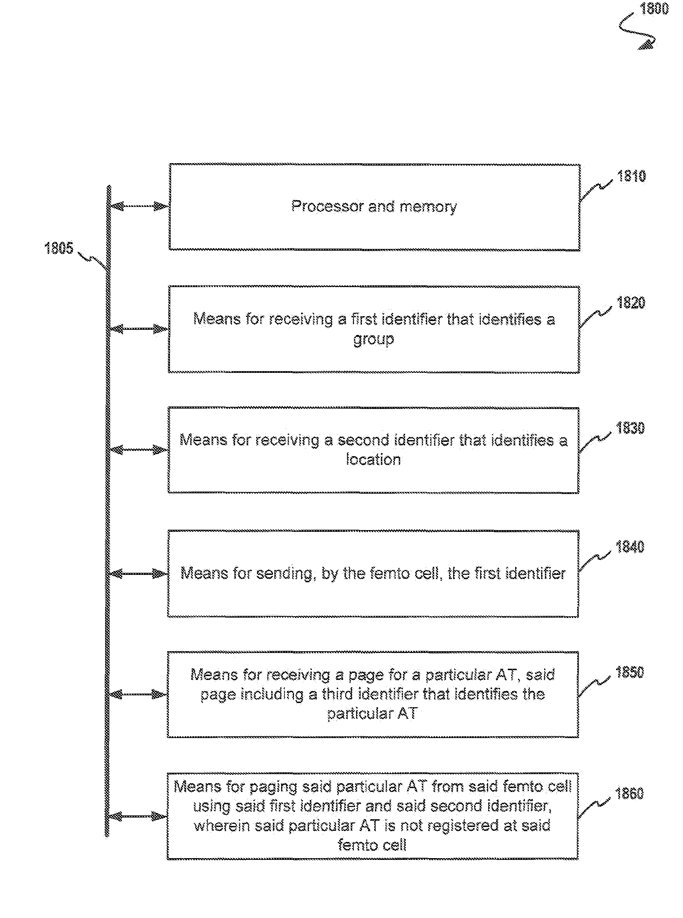

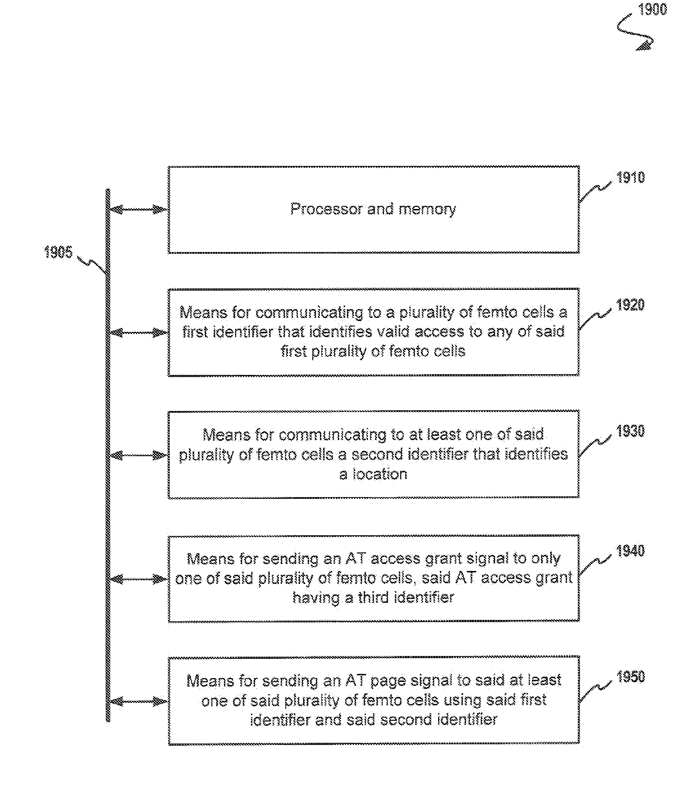

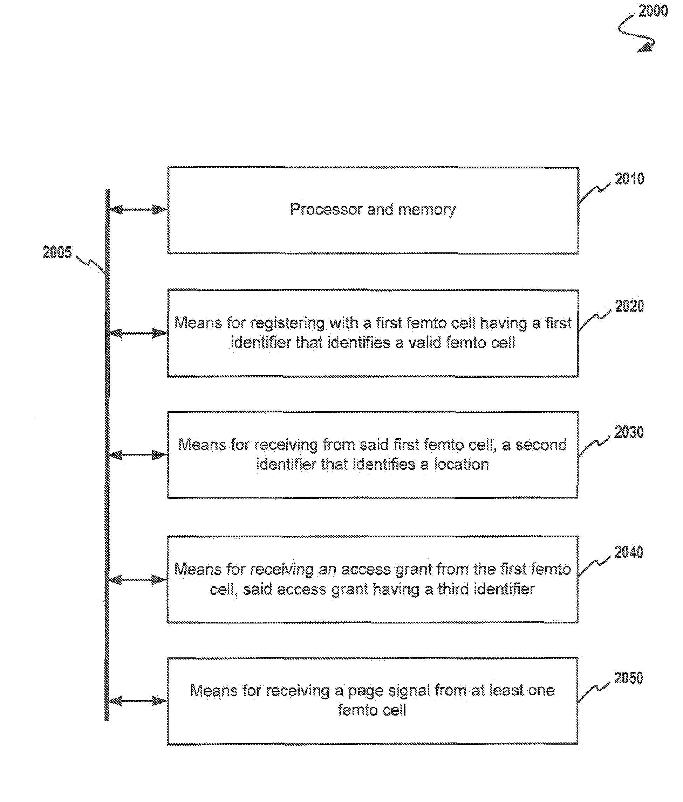

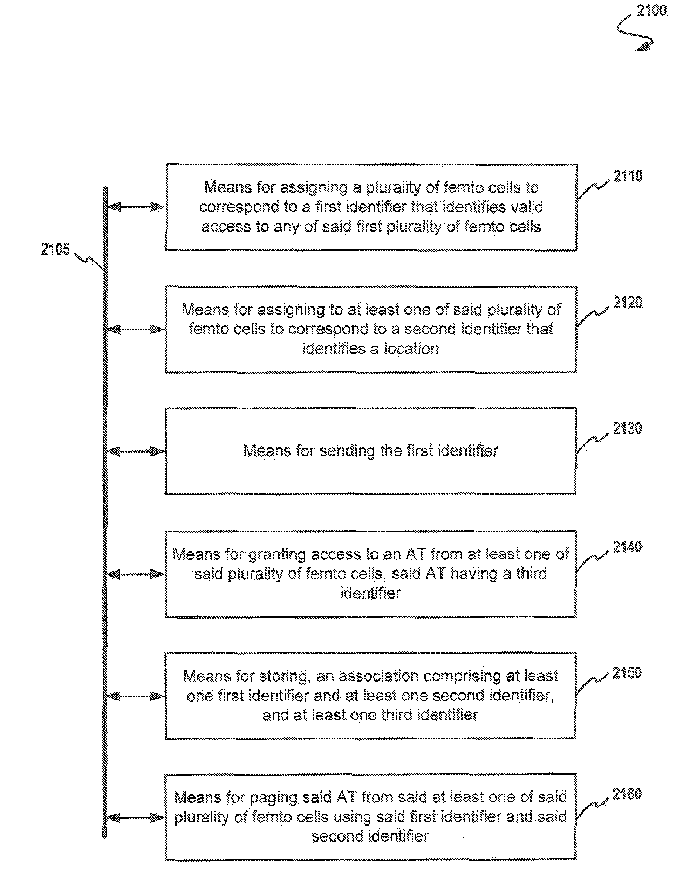

FIG. 11 is a protocol diagram depicting a messaging protocol to perform paging using femto cells, in accordance with one embodiment. As an option, the present protocol 1100 may be implemented in the context of the architecture and functionality of FIG. 1 through FIG. 10. Of course, however, the protocol 1100 or any operation therein may be carried out in any desired environment.

As shown, the protocol 1100 is carried out by components including access terminal AT-1 1110, femto cell HNB-1 1112, femto cell HNB-2 1114, femto cell HNB-5 1116, and an authorizing component 1118. Also participating in the protocol is a module (not shown) for sending an access control list ACL 1015, and a module (not shown) for sending a page message 1160.

The protocol may commence at any point in time, and the specific order and/or interleaving of messages and operations involved in the protocol are presented for illustrative purposes. As shown, each femto cell HNB-1, HNB-2, and HNB-5 broadcasts a transmission including their respective location area code (e.g. LAC) and femto cell identifier (e.g. HNBID). An access terminal in proximity, in this case access terminal AT-1 1110, receives the broadcasts 1104, 1106, and 1108. Access terminals select one femto-cell for reselecting (see operation 1120). If the location code has changed, then the access terminal AT-1 performs a location update (see message 1125) and provides the access terminal's identification (see message 1130). The receiving femto cell (e.g. HNB-1 1112) initiates the AT registration with an authorizing component 1118, including in the message the access terminal identification (e.g. IMSI). Using an AT-to-Group representation (e.g. AT-to-group table 680), the authorizing component may map the access terminal identifier (e.g. IMSI) to one or more group IDs (e.g. CSGs), and may further map the group IDs to a list of femto cells, each of which femto cell receives authorization information for the access terminal AT-1 (see messages 1152, 1154, and 1156).

At some point in time, a module might send a page message 1160 destined for AT-1. The authorizing component 1118 may determine the CSG and LAC where AT-1 is registered (see operation 1165). Also, the authorizing component 1118 may determine a list of all HNBs with the same CSG and LAC as the HNB where AT-1 is registered (see operation 1170). The page request is then relayed to all HNBs with the same CSG and LAC as the HNB where AT-1 is registered, as in this example, HNB-2 (see message 1172) and HNB-1 (see message 1176). Each of those HNBs where AT-1 is registered then relay the page to AT-1 (see message 1174 and see message 1178). The AT then may respond to the page.

FIG. 12 depicts a block diagram of a system for access control in a femto cell. As an option, the present system 1200 may be implemented in the context of the architecture and functionality of the embodiments described herein. Of course, however, the system 1200 or any operation therein may be carried out in any desired environment. As shown, system 1200 includes a plurality of modules, each connected to a communication link 1205, and any module can communicate with other modules over communication link 1205. The modules of the system can, individually or in combination, perform method steps within system 1200. Any method steps performed within system 1200 may be performed in any order unless as may be specified in the claims. As shown, system 1200 implements a method for access control in a femto cell, the system 1200 comprising modules for: assigning at least one femto cell to correspond to a first identifier that identifies valid access to the femto cell (see module 1210); storing a list comprising at least one second identifier and at least one first identifier, wherein a second identifier corresponds to an AT and the list indicates valid first identifier and second identifier pairs (see module 1220); sending, by the femto cell, the first identifier (see module 1230); receiving, at a femto cell, a request from an AT for access (see module 1240); determining, from the list, whether a second identifier for the AT corresponds to a valid first identifier for the femto cell (see module 1250); and granting access to the AT at the femto cell in response to the request if the AT is identified (see module 1260).

FIG. 13 depicts a block diagram of a system to perform certain functions of a femto cell. As an option, the present system 1300 may be implemented in the context of the architecture and functionality of the embodiments described herein. Of course, however, the system 1300 or any operation therein may be carried out in any desired environment. As shown, system 1300 comprises a plurality of modules including a processor and a memory, each module connected to a communication link 1305, and any module can communicate with other modules over communication link 1305. The modules of the system can, individually or in combination, perform method steps within system 1300. Any method steps performed within system 1300 may be performed in any order unless as may be specified in the claims. As shown, FIG. 13 implements a femto cell as a system 1300, comprising modules including at least one processor and memory (see module 1310) and modules for: receiving a request from an AT for access (see module 1320); sending, by the femto cell, at least one first identifier (see module 1330); granting the AT access to the femto cell in response to the request if the AT has access rights to the femto cell. The access rights are derived from a list comprising at least one second identifier and at least one first identifier where a first identifier identifies valid access to the femto cell and a second identifier corresponds to an AT, the list indicating valid first identifier and second identifier pairs (see module 1340).

FIG. 14 depicts a block diagram of a system to perform certain functions of a femto cell gateway. As an option, the present system 1400 may be implemented in the context of the architecture and functionality of the embodiments described herein. Of course, however, the system 1400 or any operation therein may be carried out in any desired environment. As shown, system 1400 comprises a plurality of modules including a processor and a memory, each module connected to a communication link 1405, and any module can communicate with other modules over communication link 1405. The modules of the system can, individually or in combination, perform method steps within system 1400. Any method steps performed within system 1400 may be performed in any order unless as may be specified in the claims. As shown, FIG. 14 implements a femto cell gateway as a system 1400, comprising modules including at least one processor and memory (see module 1410) and modules for: storing a list comprising at least one second identifier and at least one first identifier, wherein a first identifier identifies valid access to the femto cell and a second identifier corresponds to an AT, the list indicates valid first identifier and second identifier pairs (see module 1420); receiving a request to determine whether an AT is valid to access a femto cell (see module 1430); and generating an indication to grant the AT access to the femto cell if the AT is identified from the list (see module 1440).

FIG. 15 depicts a block diagram of a system to perform certain functions of an access terminal (AT). As an option, the present system 1500 may be implemented in the context of the architecture and functionality of the embodiments described herein. Of course, however, the system 1500 or any operation therein may be carried out in any desired environment. As shown, system 1500 comprises a plurality of modules including a processor and a memory, each module connected to a communication link 1505, and any module can communicate with other modules over communication link 1505. The modules of the system can, individually or in combination, perform method steps within system 1500. Any method steps performed within system 1500 may be performed in any order unless as may be specified in the claims. As shown, FIG. 15 implements an access terminal (AT) as a system 1500, comprising modules including at least one processor and memory (see module 1510) and modules for: generating a request for access to a femto cell (see module 1520); receiving access to the femto cell in response to the request if the AT has access rights to the femto cell, wherein the access rights are derived from a list comprising at least one second identifier and at least one first identifier and wherein a first identifier identifies valid access to the femto cell and a second identifier corresponds to an AT, the list indicating valid first identifier and second identifier pairs (see module 1530).

FIG. 16 depicts a block diagram of an apparatus for access control in a femto cell using hardware and software means. As an option, the present system 1600 may be implemented in the context of the architecture and functionality of the embodiments described herein. Of course, however, the system 1600 or any operation therein may be carried out in any desired environment. As shown, system 1600 includes a plurality of hardware and software components, each connected to a communication link 1605, and any one component can communicate with the others over communication link 1605. The system 1600 can, individually or in combination, perform method steps within system 1600. Any method steps performed within system 1600 may be performed by any component and in any order unless as may be specified in the claims. As shown, FIG. 16 implements an apparatus for access control in a femto cell comprising hardware and software means for assigning at least one femto cell to correspond to a first identifier that identifies valid access to the femto cell (see module 1610); means for storing a list comprising at least one second identifier and at least one first identifier, wherein a second identifier corresponds to an AT and the list indicates valid first identifier and second identifier pairs (see component 1620); means for sending, by the femto cell, the first identifier (see component 1630); means for receiving, at a femto cell, a request from an AT for access (see component 1640); means for determining, from the list, whether a second identifier for the AT corresponds to a valid first identifier for the femto cell (see component 1650); and means for granting access to the AT at the femto cell in response to the request if the AT is identified (see component 1660).

FIG. 17 depicts a block diagram of a system for paging in femto cells. As an option, the present system 1700 may be implemented in the context of the architecture and functionality of the embodiments described herein. Of course, however, the system 1700 or any operation therein may be carried out in any desired environment. As shown, system 1700 includes a plurality of modules, each connected to a communication link 1705, and any module can communicate with other modules over communication link 1705. The modules of the system can, individually or in combination, perform method steps within system 1700. Any method steps performed within system 1700 may be performed in any order unless as may be specified in the claims. As shown, system 1700 implements a method for paging in femto cells, the system 1700 comprising modules for: assigning a plurality of femto cells to correspond to a first identifier that identifies valid access to any of the first plurality of femto cells (see module 1710); assigning at least one of the plurality of femto cells to correspond to a second identifier that identifies a location (see module 1720); sending, by at least one of the plurality of femto cells, the first identifier (see module 1730); granting access to an AT from at least one of the plurality of femto cells, the AT having a third identifier (see module 1740); storing an association comprising at least one first identifier and at least one second identifier, and at least one third identifier (see module 1750); and paging the AT from the at least one of the plurality of femto cells using the first identifier and the second identifier, and the third identifier (see module 1760).

FIG. 18 depicts a block diagram of a system to perform certain functions of a femto cell. As an option, the present system 1800 may be implemented in the context of the architecture and functionality of the embodiments described herein. Of course, however, the system 1800 or any operation therein may be carried out in any desired environment. As shown, system 1800 comprises a plurality of modules including a processor and a memory, each module connected to a communication link 1805, and any module can communicate with other modules over communication link 1805. The modules of the system can, individually or in combination, perform method steps within system 1800. Any method steps performed within system 1800 may be performed in any order unless as may be specified in the claims. As shown, FIG. 18 implements a femto cell as a system 1800, comprising modules including at least one processor and memory (see module 1810) and modules for: receiving a first identifier that identifies a group (see module 1820); receiving a second identifier that identifies a location (see module 1830); sending, by the femto cell, the first identifier (see module 1840); receiving a page for a particular AT, the page including a third identifier that identifies the particular AT (see module 1850); and paging the particular AT from the femto cell using the first identifier and the second identifier, wherein the particular AT is not registered at the femto cell (see module 1860).

FIG. 19 depicts a block diagram of a system to perform certain functions of a femto cell gateway. As an option, the present system 1900 may be implemented in the context of the architecture and functionality of the embodiments described herein. Of course, however, the system 1900 or any operation therein may be carried out in any desired environment. As shown, system 1900 comprises a plurality of modules including a processor and a memory, each module connected to a communication link 1905, and any module can communicate with other modules over communication link 1905. The modules of the system can, individually or in combination, perform method steps within system 1900. Any method steps performed within system 1900 may be performed in any order unless as may be specified in the claims. As shown, FIG. 19 implements a femto cell gateway as a system 1900, comprising modules including at least one processor and memory (see module 1910) and modules for: communicating to a plurality of femto cells a first identifier that identifies valid access to any of the first plurality of femto cells (see module 1920); communicating to at least one of the plurality of femto cells a second identifier that identifies a location (see module 1930); sending an AT access grant signal to only one of the plurality of femto cells, the AT access grant having a third identifier (see module 1940); and sending an AT page signal to the at least one of the plurality of femto cells using the first identifier and the second identifier (see module 1950).

FIG. 20 depicts a block diagram of a system to perform certain functions of an access terminal. As an option, the present system 2000 may be implemented in the context of the architecture and functionality of the embodiments described herein. Of course, however, the system 2000 or any operation therein may be carried out in any desired environment. As shown, system 2000 comprises a plurality of modules including a processor and a memory, each module connected to a communication link 2005, and any module can communicate with other modules over communication link 2005. The modules of the system can, individually or in combination, perform method steps within system 2000. Any method steps performed within system 2000 may be performed in any order unless as may be specified in the claims. As shown, FIG. 20 implements an access terminal as a system 2000, comprising modules including at least one processor and memory (see module 2010) and modules for: registering with a first femto cell having a first identifier that identifies a valid femto cell (see module 2020); receiving from the first femto cell, a second identifier that identifies a location (see module 2030); receiving an access grant from the first femto cell, the access grant having a third identifier (see module 2040); and receiving a page signal from at least one femto cell (see module 2050).

FIG. 21 depicts a block diagram of an apparatus for paging in femto cells using hardware and software means. As an option, the present system 2100 may be implemented in the context of the architecture and functionality of the embodiments described herein. Of course, however, the system 2100 or any operation therein may be carried out in any desired environment. As shown, system 2100 includes a plurality of hardware and software components, each connected to a communication link 2105, and any one component can communicate with the others over communication link 2105. The system 2100 can, individually or in combination, perform method steps within system 2100. Any method steps performed within system 2100 may be performed by any component and in any order unless as may be specified in the claims. As shown, FIG. 21 implements an apparatus for paging in femto cells comprising hardware and software components implementing: means for assigning a plurality of femto cells to correspond to a first identifier that identifies valid access to any of the first plurality of femto cells (see component 2110); means for assigning to at least one of the plurality of femto cells to correspond to a second identifier that identifies a location (see component 2120); means for sending, the first identifier (see component 2130); means for granting access to an AT from at least one of the plurality of femto cells, the AT having a third identifier (see component 2140); means for storing, an association comprising at least one first identifier and at least one second identifier, and at least one third identifier (see component 2150); and means for paging the AT from the at least one of the plurality of femto cells using the first identifier and the second identifier (see component 2160).

What has been described above includes examples of aspects of the claimed subject matter. It is, of course, not possible to describe every conceivable combination of components or methodologies for purposes of describing the claimed subject matter, but one of ordinary skill in the art may recognize that many further combinations and permutations of the disclosed subject matter are possible. Accordingly, the disclosed subject matter is intended to embrace all such alterations, modifications and variations that fall within the spirit and scope of the appended claims. Furthermore, to the extent that the terms "includes", "has" or "having" are used in either the detailed description or the claims, such terms are intended to be inclusive in a manner similar to the term "comprising" as "comprising" is interpreted when employed as a transitional word in a claim.

It is understood that the specific order or hierarchy of steps in the processes disclosed is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g. a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosed embodiments is provided to enable any person skilled in the art to make or use the present disclosure. Various modifications to these embodiments will be readily apparent to those skilled in the art, and the generic principles defined herein may be applied to other embodiments without departing from the spirit or scope of the disclosure. Thus, the present disclosure is not intended to be limited to the embodiments shown herein but is to be accorded the widest scope consistent with the principles and novel features disclosed herein.

### ALTERNATIVE EMBODIMENTS

1. A method for access control in a femto cell, comprising: assigning at least one femto cell to correspond to a first identifier that identifies valid access to said femto cell; storing a list comprising at least one second identifier and at least one first identifier, wherein a second identifier corresponds to an AT and said list indicates valid first identifier and second identifier pairs; receiving, at a femto cell, a request from an AT for access; sending, by the femto cell, the first identifier to at least one access control component; determining, from said list, whether a second identifier for said AT corresponds to a valid first identifier for said femto cell; and granting access to said AT at said femto cell in response to said request if said AT is identified.
2. The method as set forth in clause 1, wherein said access control component is a Home NodeB gateway (HNB-GW).
3. The method as set forth in clause 1, wherein said storing said list comprises storing said list at a femto cell gateway.
4. The method as set forth in clause 1, wherein assigning at least one femto cell to correspond to a first identifier comprises assigning one femto cell to a first identifier in a residential deployment.
5. The method as set forth in clause 1, wherein assigning at least one femto cell to correspond to a first identifier comprises assigning a plurality of femto cells to a first identifier in an enterprise deployment.
6. The method as set forth in clause 1, wherein said first identifier comprises a closed subscriber group identifier (CSGID).
7. The method as set forth in clause 1, wherein said second identifier comprises an international mobile station identity (IMSI).
8. The method as set forth in clause 1, wherein: said first identifier comprises a closed subscriber group identifier (CSGID); said second identifier comprises an IMSI; and said list comprises a list of at least one CSGID that is valid for an IMSI.
9. A femto cell comprising: at least one processor and memory for: receiving a request from an AT for access; sending, by the femto cell, at least one first identifier; and granting said AT access to said femto cell in response to said request if said AT has access rights to said femto cell, wherein said access rights are derived from a list comprising at least one second identifier and at least one first identifier, wherein a first identifier identifies valid access to said femto cell and a second identifier corresponds to an AT, said list indicates valid first identifier and second identifier pairs.
10. The femto cell as set forth in clause 9, further for storing said list.
11. The femto cell as set forth in clause 10, wherein said storing said list comprises storing said list at a femto cell gateway.
12. The femto cell as set forth in clause 9, wherein said granting is performed in a residential deployment.
13. The femto cell as set forth in clause 9, wherein said granting is performed in an enterprise deployment.
14. The femto cell as set forth in clause 9, wherein said first identifier comprises a closed subscriber group identifier (CSGID).
15. The femto cell as set forth in clause 9, wherein said second identifier comprises an IMSI.
16. The femto cell as set forth in clause 9, wherein: said first identifier comprises a closed subscriber group identifier (CSGID); said second identifier comprises an IMSI; and said list comprises a list of IMSIs that are valid for a CSGID.
17. The femto cell as set forth in clause 9, wherein: said first identifier comprises a closed subscriber group identifier (CSGID); said second identifier comprises an IMSI; and said list comprises a list of at least one CSGID that is valid for an IMSI.
18. A femto cell gateway comprising: at least one processor and memory for: storing a list comprising at least one second identifier and at least one first identifier, wherein a first identifier identifies valid access to said femto cell and a second identifier corresponds to an AT, said list indicates valid first identifier and second identifier pairs; receiving a request to determine whether an AT is valid to access a femto cell; and generating an indication to grant said AT access to said femto cell if said AT is identified from said list.
19. The femto cell gateway as set forth in clause 18, wherein said femto cell gateway is in a residential deployment.
20. The femto cell gateway as set forth in clause 18, wherein said femto cell gateway is in an enterprise deployment.
21. The femto cell gateway as set forth in clause 18, wherein said first identifier comprises a closed subscriber group identifier (CSGID).
22. The femto cell gateway as set forth in clause 18, wherein said second identifier comprises an IMSI.
23. The femto cell gateway as set forth in clause 18, wherein: said first identifier comprises a closed subscriber group identifier (CSGID); said second identifier comprises an IMSI; and said list comprises a list of IMSIs that are valid for a CSGID.
24. The femto cell gateway as set forth in clause 18, wherein: said first identifier comprises a closed subscriber group identifier (CSGID); said second identifier comprises an IMSI; and said list comprises a list of at least one CSGID that is valid for an IMSI.
25. The femto cell gateway as set forth in clause 18, wherein receiving a request to determine whether an AT is valid to access a femto cell is determined by at least one of, mobility management entity (MME), a mobile switch center (MSC), a visiting location register (VLR), Serving GPRS Serving Node (SGSN).
26. An access terminal (AT) comprising: at least one processor and memory for: generating a request for access to a femto cell; and receiving access to said femto cell in response to said request if said AT has access rights to said femto cell, wherein said access rights are derived from a list comprising at least one second identifier and at least one first identifier, wherein a first identifier identifies valid access to said femto cell and a second identifier corresponds to an AT, said list indicates valid first identifier and second identifier pairs.
27. The access terminal as set forth in clause 26, wherein said femto cell is in a residential deployment.
28. The access terminal as set forth in clause 26, wherein said femto cell is in an enterprise deployment.
29. The access terminal as set forth in clause 26, wherein said first identifier comprises a closed subscriber group identifier (CSGID).
30. The access terminal as set forth in clause 26, wherein said second identifier comprises an IMSI.
31. The access terminal as set forth in clause 26, wherein: said first identifier comprises a closed subscriber group identifier (CSGID); said second identifier comprises an IMSI; and said list comprises a list of IMSIs that are valid for a CSGID.
32. The access terminal as set forth in clause 26, wherein: said first identifier comprises a closed subscriber group identifier (CSGID); said second identifier comprises an IMSI; and said list comprises a list of at least one CSGID that is valid for an IMSI.
33. The access terminal as set forth in clause 26, wherein said list is stored by at least one of, a femto cell gateway, Home NodeB Gateway, mobility management entity (MME), a mobile switch center (MSC), a visiting location register (VLR), Serving GPRS Serving Node (SGSN).
34. A tangible computer readable media embodying a method for access control in a femto cell, the method comprising: assigning at least one femto cell to correspond to a first identifier that identifies valid access to said femto cell; storing a list comprising at least one second identifier and at least one first identifier, wherein a second identifier corresponds to an AT and said list indicates valid first identifier and second identifier pairs; sending, by the femto cell, the first identifier; receiving, at a femto cell, a request from an AT for access; determining, from said list, whether a second identifier for said AT corresponds to a valid first identifier for said femto cell; and granting access to said AT at said femto cell in response to said request if said AT is identified.
35. The tangible computer readable media as set forth in clause 34, wherein said storing said list comprises storing said list at a femto cell gateway or Home NodeB Gateway.
36. The tangible computer readable media as set forth in clause 34, wherein assigning at least one femto cell to correspond to a first identifier comprises assigning one femto cell to a first identifier in a residential deployment.
37. The tangible computer readable media as set forth in clause 34, wherein assigning at least one femto cell to correspond to a first identifier comprises assigning a plurality of femto cells to a first identifier in an enterprise deployment.
38. The tangible computer readable media as set forth in clause 34, wherein said first identifier comprises a closed subscriber group identifier (CSGID).
39. The tangible computer readable media as set forth in clause 34, wherein said second identifier comprises an IMSI.
40. The tangible computer readable media as set forth in clause 34, wherein: said first identifier comprises a closed subscriber group identifier (CSGID); said second identifier comprises an IMSI; and said list comprises a list of IMSIs that are valid for a CSGID.
41. The tangible computer readable media as set forth in clause 34, wherein: said first identifier comprises a closed subscriber group identifier (CSGID); said second identifier comprises an IMSI; and said list comprises a list of at least one CSGID that is valid for an IMSI.
42. An apparatus for access control in a femto cell comprising: means for assigning at least one femto cell to correspond to a first identifier that identifies valid access to said femto cell; means for storing a list comprising at least one second identifier and at least one first identifier, wherein a second identifier corresponds to an AT and said list indicates valid first identifier and second identifier pairs; means for sending, by the femto cell, the first identifier; means for receiving, at a femto cell, a request from an AT for access; means for determining, from said list, whether a second identifier for said AT corresponds to a valid first identifier for said femto cell; and means for granting access to said AT at said femto cell in response to said request if said AT is identified.
43. The apparatus as set forth in clause 42, wherein said storing said list comprises storing said list at a femto cell gateway.
44. The apparatus as set forth in clause 42, wherein assigning at least one femto cell to correspond to a first identifier comprises assigning one femto cell to a first identifier in a residential deployment.
45. The apparatus as set forth in clause 42, wherein assigning at least one femto cell to correspond to a first identifier comprises assigning a plurality of femto cells to a first identifier in an enterprise deployment.
46. The apparatus as set forth in clause 42, wherein said first identifier comprises a closed subscriber group identifier (CSGID).
47. The apparatus as set forth in clause 42, wherein said second identifier comprises an IMSI.
48. The apparatus as set forth in clause 42, wherein: said first identifier comprises a closed subscriber group identifier (CSGID); said second identifier comprises an IMSI; and said list comprises a list of IMSIs that are valid for a CSGID.
49. The apparatus as set forth in clause 42, wherein: said first identifier comprises a closed subscriber group identifier (CSGID); said second identifier comprises an IMSI; and said list comprises a list of at least one CSGID that is valid for an IMSI.
50. A method for paging in femto cells comprising: assigning a plurality of femto cells to correspond to a first identifier that identifies valid access to any of said first plurality of femto cells; assigning at least one of said plurality of femto cells to correspond to a second identifier that identifies a location; sending, by the femto cell, the first identifier to at least one access control component; granting access to an AT from at least one of said plurality of femto cells, said AT having a third identifier; storing an association comprising at least one first identifier and at least one second identifier, and at least one third identifier; and paging said AT from said at least one of said plurality of femto cells using said first identifier and said second identifier, and said third identifier.
51. The method as set forth in clause 50, wherein said access control component is a Home NodeB gateway (HNB-GW).
52. The method as set forth in clause 50, wherein the first identifier is a closed subscriber group identifier (CSGID), and wherein the second identifier is a location area code (LAC).
53. The method as set forth in clause 50, wherein the third identifier is an international mobile station identity (IMSI).
54. The method as set forth in clause 50, wherein granting access to an AT includes a network element comprising at least one of, a mobility management entity (MME), a Home NodeB Gateway (HNB -GW), a mobile switch center (MSC), a visiting location register (VLR), a Serving GPRS Serving Node (SGSN).
55. The method as set forth in clause 50, wherein the paging is performed in a residential deployment.
56. The method as set forth in clause 50, wherein the paging is performed in an enterprise deployment.
57. The method as set forth in clause 52, wherein said LAC corresponds to one or more HNBs in an enterprise deployment.
58. The method as set forth in clause 52, wherein said LAC corresponds to one or more Home NodeB s (HNBs) in a residential deployment.
59. The method as set forth in clause 51 , wherein the closed subscriber group identifier (CSGID) is received from at least one of, a mobility management entity (MME), a Home NodeB Gateway (HNB -GW), a mobile switch center (MSC), a visiting location register (VLR), a Serving GPRS Serving Node (SGSN).
60. The method as set forth in clause 52, wherein the location area code (LAC) is received from at least one of, a mobility management entity (MME), a Home NodeB Gateway (HNB -GW), a mobile switch center (MSC), a visiting location register (VLR).
61. The method as set forth in clause 50, wherein the granting access to an AT is granted by at least one of, a mobility management entity (MME), a Home NodeB Gateway (HNB -GW), a mobile switch center (MSC), a visiting location register (VLR).
62. A femto cell comprising: at least one processor and memory for: receiving a first identifier that identifies a group; receiving a second identifier that identifies a location; sending, by the femto cell, the first identifier; receiving a page for a particular AT, said page including a third identifier that identifies the particular AT; and paging said particular AT from said femto cell using said first identifier and said second identifier, wherein said particular AT is not registered at said femto cell.
63. The femto cell as set forth in clause 62, wherein the first identifier is a closed subscriber group identifier (CSGID).
64. The femto cell as set forth in clause 62, wherein the second identifier is a location area code (LAC).
65. The femto cell as set forth in clause 62, wherein the third identifier is an international mobile station identity (IMSI).
66. The femto cell as set forth in clause 62, wherein granting access to an AT includes a network element comprising at least one of, a mobility management entity (MME), a Home NodeB Gateway (HNB -GW), a mobile switch center (MSC), a visiting location register (VLR), a Serving GPRS Serving NodeB (SGSN).
67. The femto cell as set forth in clause 62, wherein the paging is performed in a residential deployment.
68. The femto cell as set forth in clause 62, wherein the paging is performed in an enterprise deployment.
69. The femto cell as set forth in clause 64, wherein said LAC corresponds to one or more HNBs in an enterprise deployment.
70. The femto cell as set forth in clause 64, wherein said LAC corresponds to one or more HNBs in a residential deployment.
71. The femto cell as set forth in clause 63, wherein the closed subscriber group identifier (CSGID) is received from at least one of, a mobility management entity (MME), a Home NodeB Gateway (HNB -GW), a mobile switch center (MSC), a visiting location register (VLR), a Serving GPRS Serving Node (SGSN).
72. The femto cell as set forth in clause 64, wherein the location area code (LAC) is received from at least one of, a mobility management entity (MME), a Home NodeB Gateway (HNB - GW), a mobile switch center (MSC), a visiting location register (VLR), a Serving GPRS Serving NodeB (SGSN).
73. The femto cell as set forth in clause 62, wherein the granting access to an AT is granted by at least one of, a mobility management entity (MME), a Home NodeB Gateway (HNB -GW), a mobile switch center (MSC), a visiting location register (VLR).
74. A femto cell gateway comprising: at least one processor and memory for: communicating to a plurality of femto cells a first identifier that identifies valid access to any of said first plurality of femto cells; communicating to at least one of said plurality of femto cells a second identifier that identifies a location; sending an AT access grant signal to only one of said plurality of femto cells, said AT access grant having a third identifier; and sending an AT page signal to said at least one of said plurality of femto cells using said first identifier and said second identifier.
75. The femto cell gateway as set forth in clause 74, wherein communicating to a plurality of femto cells includes receiving a CSGID at a Home NodeB Gateway (HNB-GW).
76. The femto cell gateway as set forth in clause 74, further comprising receiving the first identifier from a femto cell.
77. The femto cell gateway as set forth in clause 74, wherein the first identifier is a closed subscriber group identifier (CSGID), wherein the second identifier is a location area code (LAC), and wherein the third identifier is an international mobile station identity (IMSI).
78. The femto cell gateway as set forth in clause 74, wherein granting access to an AT includes a network element comprising at least one of, a mobility management entity (MME), a Home NodeB Gateway (HNB -GW), a mobile switch center (MSC), a visiting location register (VLR).
79. The femto cell gateway as set forth in clause 74, wherein the paging is performed in a residential deployment.
80. The femto cell gateway as set forth in clause 74, wherein the paging is performed in an enterprise deployment.
81. The femto cell gateway as set forth in clause 76, wherein said LAC corresponds to one or more HNBs in an enterprise deployment.
82. The femto cell gateway as set forth in clause 76, wherein said LAC corresponds to one or more HNBs in a residential deployment.
83. The femto cell gateway as set forth in clause 75, wherein the closed subscriber group identifier (CSGID) is received from at least one of, a mobility management entity (MME), a HNB -GW, a mobile switch center (MSC), a visiting location register (VLR), a Serving GPRS Serving Node (SGSN).
84. The femto cell gateway as set forth in clause 76, wherein the location area code (LAC) is received from at least one of, a mobility management entity (MME), a HNB -GW, a mobile switch center (MSC), a visiting location register (VLR).
85. The femto cell gateway as set forth in clause 74, wherein the granting access to an AT is granted by at least one of, a mobility management entity (MME), a femto cell gateway, a mobile switch center (MSC), a visiting location register (VLR), a Serving GPRS Serving Node (SGSN).
86. An access terminal comprising: at least one processor and memory for: registering with a first femto cell having a first identifier that identifies a valid femto cell; receiving from said first femto cell, a second identifier that identifies a location; receiving an access grant from the first femto cell, said access grant having a third identifier; and receiving a page signal from at least one femto cell.
87. The access terminal as set forth in clause 86, wherein the first identifier is a closed subscriber group identifier (CSGID).
88. The access terminal as set forth in clause 86, wherein the second identifier is a location area code (LAC).
89. The access terminal as set forth in clause 86, wherein the third identifier is an international mobile station identity (IMSI).
90. The access terminal as set forth in clause 86, wherein granting access to an AT includes a network element comprising at least one of, a mobility management entity (MME), a HNB -GW, a mobile switch center (MSC), a visiting location register (VLR).
91. The access terminal as set forth in clause 86, wherein the paging is performed in a residential deployment.
92. The access terminal as set forth in clause 86, wherein the paging is performed in an enterprise deployment.
93. The access terminal as set forth in clause 88, wherein said LAC corresponds to one or more HNBs in an enterprise deployment.
94. The access terminal as set forth in clause 88, wherein said LAC corresponds to one or more HNBs in a residential deployment.
95. The access terminal as set forth in clause 87, wherein the closed subscriber group identifier (CSGID) is received from at least one of, a mobility management entity (MME), a HNB -GW, a mobile switch center (MSC), a visiting location register (VLR), a Serving GPRS Serving Node (SGSN).
96. The access terminal as set forth in clause 86, wherein the location area code (LAC) is received from at least one of, a mobility management entity (MME), a HNB -GW, a mobile switch center (MSC), a visiting location register (VLR).
97. The access terminal as set forth in clause 86, wherein the granting access to an AT is granted by at least one of, a mobility management entity (MME), an access terminal, a mobile switch center (MSC), a visiting location register (VLR), a Serving GPRS Serving Node (SGSN).
98. A tangible computer readable media embodying a method for paging in femto cells, the method comprising: assigning a plurality of femto cells to correspond to a first identifier that identifies valid access to any of said first plurality of femto cells; assigning to at least one of said plurality of femto cells to correspond to a second identifier that identifies a location; sending, by at least one of said plurality of femto cells, the first identifier; granting access to an AT from at least one of said plurality of femto cells, said AT having a third identifier; storing an association comprising at least one first identifier and at least one second identifier, and at least one third identifier; and paging said AT from said at least one of said plurality of femto cells using said first identifier and said second identifier.
99. The tangible computer readable media as set forth in clause 98, wherein the first identifier is a closed subscriber group identifier (CSGID).
100. The tangible computer readable media as set forth in clause 98, wherein the second identifier is a location area code (LAC).
101. The tangible computer readable media as set forth in clause 98, wherein the third identifier is an international mobile station identity (IMSI).
102. The tangible computer readable media as set forth in clause 98, wherein granting access to an AT includes a network element comprising at least one of, a mobility management entity (MME), a HNB -GW, a mobile switch center (MSC), a visiting location register (VLR), a Serving GPRS Serving Node (SGSN).
103. The tangible computer readable media as set forth in clause 98, wherein the paging is performed in a residential deployment.
104. The tangible computer readable media as set forth in clause 98, wherein the paging is performed in an enterprise deployment.
105. The tangible computer readable media as set forth in clause 100, wherein said LAC corresponds to one or more HNBs in an enterprise deployment.
106. The tangible computer readable media as set forth in clause 100, wherein said LAC corresponds to one or more HNBs in a residential deployment.
107. The tangible computer readable media as set forth in clause 99, wherein the closed subscriber group identifier (CSGID) is received from at least one of, a mobility management entity (MME), a HNB -GW, a mobile switch center (MSC), a visiting location register (VLR), a Serving GPRS Serving Node (SGSN).
108. The tangible computer readable media as set forth in clause 100, wherein the location area code (LAC) is received from at least one of, a mobility management entity (MME), a HNB -GW, a mobile switch center (MSC), a visiting location register (VLR).
109. The tangible computer readable media as set forth in clause 98, wherein the granting access to an AT is granted by at least one of, a mobility management entity (MME), a femto cell gateway, a mobile switch center (MSC), a visiting location register (VLR), a Serving GPRS Serving Node (SGSN).
110. An apparatus for paging in femto cells comprising: means for assigning a plurality of femto cells to correspond to a first identifier that identifies valid access to any of said first plurality of femto cells; means for assigning to at least one of said plurality of femto cells to correspond to a second identifier that identifies a location; means for sending the first identifier; means for granting access to an AT from at least one of said plurality of femto cells, said AT having a third identifier; means for storing, an association comprising at least one first identifier and at least one second identifier, and at least one third identifier; and means for paging said AT from said at least one of said plurality of femto cells using said first identifier and said second identifier.
111. The apparatus as set forth in clause 110, wherein the first identifier is a closed subscriber group identifier (CSGID).
112. The apparatus as set forth in clause 110, wherein the second identifier is a location area code (LAC).
113. The apparatus as set forth in clause 110, wherein the third identifier is an international mobile station identity (IMSI).
114. The apparatus as set forth in clause 110, wherein granting access to an AT includes a network element comprising at least one of, a mobility management entity (MME), a HNB -GW, a mobile switch center (MSC), a visiting location register (VLR), a Serving GPRS Serving Node (SGSN).
115. The apparatus as set forth in clause 110, wherein the paging is performed in a residential deployment.
116. The apparatus as set forth in clause 110, wherein the paging is performed in an enterprise deployment.
117. The apparatus as set forth in clause 112, wherein said LAC corresponds to one or more HNBs in an enterprise deployment.
118. The apparatus as set forth in clause 112, wherein said LAC corresponds to one or more HNBs in a residential deployment.
119. The apparatus as set forth in clause 111, wherein the closed subscriber group identifier (CSGID) is received from at least one of, a mobility management entity (MME), a HNB -GW, a mobile switch center (MSC), a visiting location register (VLR), a Serving GPRS Serving Node (SGSN).
120. The apparatus as set forth in clause 112, wherein the location area code (LAC) is received from at least one of, a mobility management entity (MME), a HNB -GW, a mobile switch center (MSC), a visiting location register (VLR).
121. The apparatus as set forth in clause 110, wherein the granting access to an AT is granted by at least one of, a mobility management entity (MME), a femto cell gateway, a mobile switch center (MSC), a visiting location register (VLR), a Serving GPRS Serving Node (SGSN).

## Claims

1. A method for paging in femto cells comprising:
assigning a plurality of femto cells to correspond to a first identifier that identifies valid access to any of said first plurality of femto cells;
assigning at least one of said plurality of femto cells to correspond to a second identifier that identifies a location;
sending, by the femto cell, the first identifier to at least one access control component;
granting access to an AT from at least one of said plurality of femto cells, said AT having a third identifier;
storing an association comprising at least one first identifier and at least one second identifier, and at least one third identifier; and
paging said AT from said at least one of said plurality of femto cells using said first identifier and said second identifier, and said third identifier.

2. The method as set forth in claim 1, wherein said access control component is a Home NodeB gateway (HNB-GW).

3. The method as set forth in claim 1, wherein the first identifier is a closed subscriber group identifier (CSGID), wherein the second identifier is a location area code (LAC), and wherein the third identifier is an international mobile station identity (IMSI).

4. The method as set forth in claim 1, wherein granting access to an AT includes a network element comprising at least one of, a mobility management entity (MME), a Home NodeB Gateway (HNB-GW), a mobile switch center (MSC), a visiting location register (VLR), a Serving GPRS Serving Node (SGSN).

5. The method as set forth in claim 1, wherein the paging is performed in a residential deployment or in an enterprise deployment.

6. The method as set forth in claim 3, wherein said LAC corresponds to one or more HNBs in an enterprise deployment; or in a residential deployment.

7. The method as set forth in claim 2, wherein the closed subscriber group identifier (CSGID) is received from at least one of, a mobility management entity (MME), a Home NodeB Gateway (HNB-GW), a mobile switch center (MSC), a visiting location register (VLR), a Serving GPRS Serving Node (SGSN).

8. The method as set forth in claim 3, wherein the location area code (LAC) is received from at least one of, a mobility management entity (MME), a Home NodeB Gateway (HNB-GW), a mobile switch center (MSC), a visiting location register (VLR).

9. The method as set forth in claim 1, wherein the granting access to an AT is granted by at least one of, a mobility management entity (MME), a Home NodeB Gateway (HNB-GW), a mobile switch center (MSC), a visiting location register (VLR).

10. An apparatus for paging in femto cells comprising:
means for assigning a plurality of femto cells to correspond to a first identifier that identifies valid access to any of said first plurality of femto cells;
means for assigning to at least one of said plurality of femto cells to correspond to a second identifier that identifies a location;
means for sending the first identifier;
means for granting access to an AT from at least one of said plurality of femto cells, said AT having a third identifier;
means for storing, an association comprising at least one first identifier and at least one second identifier, and at least one third identifier; and
means for paging said AT from said at least one of said plurality of femto cells using said first identifier and said second identifier and a third identifier.

11. A femto cell comprising:
at least one processor and memory for:
receiving a first identifier that identifies a group of femto cells, wherein said femto cell is from said group;
receiving a second identifier that identifies a location;
sending, by the femto cell, the first identifier;
receiving a page for a particular AT, said page including a third identifier that identifies the particular AT; and
paging said particular AT from said femto cell, wherein said particular AT is registered with another femto cell, and wherein the femto cell and said another femto cell are identified by said first and second identifier.

12. A femto cell gateway comprising:
at least one processor and memory for:
receiving from a plurality of femto cells a first identifier that identifies valid access to any of said plurality of femto cells;
communicating to at least one of said plurality of femto cells a second identifier that identifies a location;
sending an AT access grant signal to only one of said plurality of femto cells, said AT access grant having a third identifier; and
sending an AT page signal to said at least one of said plurality of femto cells using said first identifier and said second identifier, and third identifier.

13. The femto cell gateway as set forth in claim 74, wherein receiving from a plurality of femto cells includes receiving a CSGID at a Home NodeB Gateway (HNB-GW).

14. The femto cell gateway as set forth in claim 12, further comprising receiving the first identifier from a femto cell.

15. An access terminal comprising:
at least one processor and memory for:
registering with a first femto cell having a first identifier that identifies a group of femto cells including the first femto cell;
receiving from said first femto cell, a second identifier that identifies a location;
receiving an access grant from the first femto cell, said access grant having a third identifier; and
receiving a page signal from at least one femto cell, wherein said at least one femto cell is identified by said first and said second identifier.

16. A computer-readable medium containing computer executable instruction that are executable to cause a computer to perfume the steps of any of claims 1 to 9.
